# EUROPEAN PATENT SPECIFICATION

(11) **EP 2 217 634 B1**
(45) Date of publication and mention of the grant of the patent: **18.04.2012**
(21) Application number: 08858646.6
(22) Date of filing: 03.12.2008
(51) Int. Cl.: C08G 18/28, C08G 18/38, D06M 15/576

(54) **FLUOROPOLYMER COMPOSITIONS AND TREATED SUBSTRATES**
FLUORPOLYMERZUSAMMENSETZUNGEN UND BEHANDELTE SUBSTRATE
COMPOSITIONS À BASE DE FLUOROPOLYMÈRES ET SUBSTRATS TRAITÉS

(30) Priority: 06.12.2007 US 5661 P; 11.11.2008 US 268766
(43) Date of publication of application: 18.08.2010
(73) Proprietor: E. I. du Pont de Nemours and Company, Wilmington, DE 19898 (US)
(72) Inventor: BROWN, Gerald, Oronde, Wilmington DE 19809 (US); HERZOG, Axel, Hans-Joachim, West Chester PA 19380 (US); HOPKINS, Timothy, Edward, Wilmington DE 19803 (US)
(74) Representative: Heinemann, Monica
(86) International application number: PCT/US2008/085296
(87) International publication number: WO 2009/076108

(56) References cited:
- WO-A-93/01349
- WO-A-02/072657
- WO-A-2005/080465

## Description

### FIELD OF THE INVENTION

The present invention relates to the use of fluoropolymers containing non-fluorinated particles to provide oil repellency, water repellency, and soil resistance to substrates.

### BACKGROUND OF THE INVENTION

Various fluorinated polymer compositions are known to be useful as treating agents to provide surface effects to substrates. Surface effects include repellency, soil resistance, soil release, stain resistance and stain release, and other effects, which are particularly useful for fibrous substrates and other substrates such as hard surfaces. Many such treating agents are fluorinated polymers or copolymers.

Most commercially available fluorinated polymers useful as treating agents for imparting repellency to substrates contain predominantly more than eight carbons in the perfluoroalkyl chain to provide the desired properties. Honda et al, in Macromolecules (2005), 38(13), 5699-5705, teach that for perfluoroalkyl chains of greater than 8 carbons, orientation of the perfluoroalkyl chains is maintained in a parallel configuration while for such fluoroalkyl chains having fewer carbons, reorientation occurs. Thus short fluoroalkyl groups having 6 or less carbons have traditionally not been successful commercially for imparting surface effects to substrates because of the absence of highly ordered perfluoroalkyl chains at the outermost surfaces.

U.S. Patent Application 2005/0095933 discloses compositions for treating textiles formed by combining a repellent component, a stain resist component, a stain release component, and particles. Various commercially available fluorinated polymers are employed as the repellent component and the particles are inorganic oxides or basic metal salts. The fluorinated polymers and particles are separately added to a solution, and thus represent a mixture of the polymer and particle, which is applied to the substrate to be treated. WO 02/072657 A discloses a water and oil repellent polyurethane coating composition prepared by adding an aqueous dispersion of silica particles to a fluorinated polyurethane. Further, WO 2005/080465 A discloses a composition for producing abrasion resistant and alkali resistant layers of molded bodies, the composition comprising a hardenable binder of a polyurethane resin formed by reacting a polyisocyanate and a polyol, a fluorinated polymer having a functional group that can react with a functional group of the hardenable binder, and inorganic particles.

The expense of the fluorinated polymer dictates that it be used at lower levels in treating substrates to provide surface effects. However, reducing the level of fluorine by using polymers containing shorter chained perfluoroalkyl groups of six carbons or less has not been commercially successful. Thus there is a need for compositions for treating substrates which impart surface effects including water repellency, oil repellency, soil resistance, which maintain levels of performance, while using less of the expensive fluorinated component. The present invention provides such a composition.

### SUMMARY OF INVENTION

The present invention comprises a composition for imparting surface properties to substrates comprising an aqueous solution or dispersion of a polymer of at least one polyurethane having at least one urea linkage prepared by:
(i) reacting (a) at least one diisocyanate, polyisocyanate, or mixture thereof, having isocyanate groups, and (b) at least one fluorinated compound selected from the formula (I):

   R_{f}¹-L-X (I)

   wherein
   R_{f}¹ is a monovalent, partially or fully fluorinated, linear or branched, alkyl radical having 2 to 100 carbon atoms; optionally interrupted by 1 to 50 oxygen atoms; wherein the ratio of carbon atoms to oxygen atoms is at least 2:1 and no oxygen atoms are bonded to each other;
   L is a bond or a linear or branched divalent linking group having 1 to about 20 carbon atoms, said linking group optionally interrupted by 1 to about 4 hetero-radicals selected from the group consisting of -0-, -NR-, -S-, -SO-, -SO₂-, and -N(R¹)C(O)- wherein R is H or C₁ to C₆ alkyl, and said linking group optionally substituted with CH₂Cl;
   X is an isocyanate-reactive group selected from the group consisting of -OH, -N(R)H, and -SH wherein R is as defined above; and thereafter
(ii) reacting with (c) water and (d) 0.05 to about 2.0 % by weight of an isocyanate-reactive non-fluorinated particulate component, based on a total dry weight of the composition.

The present invention further comprises a method of providing water repellency, oil repellency and soil resistance to substrates comprising contacting said substrate with a composition of the present invention as described above.

The present invention further comprises a substrate which has been contacted with a composition of the present invention as described above.

### DETAILED DESCRIPTION OF INVENTION

Hereinafter trademarks are designated by upper case.

The present invention provides compositions for imparting surface effects to substrates in which fluorinated polymers have particles incorporated during the polymerization reaction used to form the polymers. Thus the particles are part of the polymer chemical structure. The particles have reactive functionalities on their surfaces, are not fluorinated, and are reacted during polymerization in the synthesis of either solution based or emulsion based fluorinated polymers. The resulting composition provides enhanced performance and durability of surface effects to treated substrates compared to traditional commercially available treatment agents not containing particles, or compared to compositions wherein treatment agents are physically mixed with particles in a treatment bath prior to application. It has been found that incorporation of small amounts as low as 0.1 % by weight of a particle into the polymer structure is effective to enhance performance. Preferably from about 0.1% to about 5% by weight, more preferably from about 0.1% to about 3% by weight, and more preferably from about 0.1 % to about 1% by weight, of the particle component is incorporated into the polymer. This invention permits use of lower amounts of traditional treatment agents, or use of agents containing short perfluoroalkyl chains of less than 8 carbon atoms (and thus containing less fluorine) without any decrease in performance.

The compositions of the present invention are prepared by first reacting (a) at least one diisocyanate, polyisocyanate, or mixture thereof, having isocyanate groups, and (b) at least one fluorinated compound. This is then reacted with (c) water and (d) an isocyanate-reactive non-fluorinated particulate component. The resulting polymer is the composition of the present invention as defined above.

Fluorinated compounds of formula (I) are useful as component (b) in preparation of various compositions of the invention.

R_{f}¹-L-X (I)

R_{f}¹ is a monovalent, partially or fully fluorinated, linear or branched, alkyl radical having 2 to 100 carbon atoms; optionally interrupted by 1 to 50 oxygen atoms; wherein the ratio of carbon atoms to oxygen atoms is at least 2:1, and preferably about 2:1 to about 3:1; and no oxygen atoms are bonded to each other. Any one carbon atom within R_{f}¹ can have up to two single bonds to oxygen. L is a bond or a linear or branched divalent linking group having 1 to about 20 carbon atoms, said linking group optionally interrupted by 1 to about 4 hetero-radicals selected from the group consisting of -O-, -NR-, -S-, -SO-, -SO₂-, and -N(R)C(O)- wherein R is H or C₁ to C₆ alkyl, and said linking group optionally substituted with CH₂Cl. X is an isocyanate-reactive group selected from the group consisting of -OH, -N(R)H, and -SH wherein R is H or C₁ to C₆ alkyl.

The copolymer compositions require as component (b) at least one fluorinated compound of formula (I), R_{f}¹-L-X, wherein the various groups R_{f}¹, L, and X are as defined above.

Preferred R_{f}¹ groups include
F(CF₂)ₙ, F(CF₂)ₙ(CH₂CF₂)ₚ, F(CF₂)ₙ(CH₂)ₓ[(CF₂CF₂)ₚ(CH₂CH₂)q]ₘ,
F(CF₂)ₙO(CF₂)ₙ, F(CF₂)ₙOCFHCF₂, or
F(CF₂)ₙ[OCF₂CF(CF₃)]p[OCF₂CF₂]_{q}, wherein n is 1 to about 6; x is 1 to about 6; and p, q, and m are each independently 1 to about 3.

Preferably L is a bond or a linking group -(L¹)ₚ-; wherein p is an integer of 1 to 4, and L¹ is selected from the group consisting of -(CₜH₂ₜ)-wherein t is an integer of 1 to 10; phenylene; C₁ - C₄ alkyl substituted phenylene; ethylene oxide; R⁵; and (A)ₚ-R⁵; wherein A is a divalent alkyl of 1 to 6 carbons, p is as defined above, and R⁵ is a divalent radical selected from the group consisting of -S(CH₂)ᵤ -, 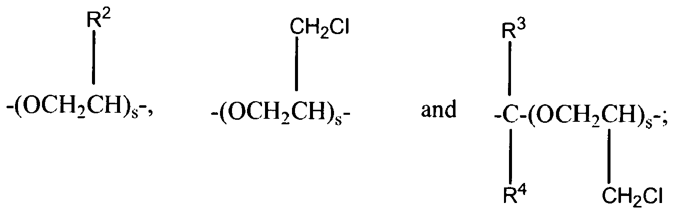 u is an integer of from about 2 to about 4;
s is an integer of 1 to about 50; and
R², R³, and R⁴ are each independently hydrogen or an alkyl group containing 1 to about 6 carbon atoms. More preferably L is a bond; -(CₜH₂ₜ)-(R⁵)ᵣ- wherein t is an integer of 1 to 10 and r is 0 or 1; -(R⁵)ᵣ wherein r is 1; or (OCH₂CH₂)ᵥ wherein v is 2 to 4.

Preferably the monomers (I) are selected from the group consisting of formulas (Ia), (Ib), (Ic), (Id), and (Ie):

F(CF₂)ₙ(CH₂)ₜX (Ia)

F(CF₂)ₙ(CH₂CF₂)ₚ(CH₂CH₂)_{q}(R⁵)ᵣX (Ib)

F(CF₂)ₙO(CH₂)ₓ[(CF₂CF₂)ₚ(CH₂CH₂)_{q}]ₘ(R⁵)ᵣX (Ic)

F(CF₂)ₙ(CF2)ₙCH₂(CₜH₂ₜ)X (Id)

F(CF₂)ₙ-OCFHCF₂(OCH₂CH₂)ᵥX (Ie)

wherein
t is an integer of 1 to 10;
n is an integer of about 1 to 6;
p, q, and m are each independently an integer of 1 to 3;
x is an integer of 1 to 6;
r is 0 or 1;
X is OH, N(R)H or SH wherein R is H or C₁ to C₆ alkyl;
R⁵ is a divalent radical selected from the group consisting of -S(CH2)u-, 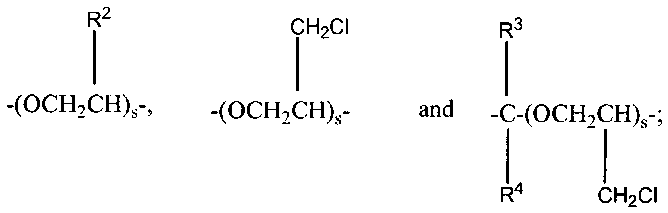 u is an integer of 2 to 4;
s is an integer of 1 to 50;
v is an integer of 2 to 4;
R², R³, and R⁴ are each independently hydrogen or an alkyl group containing 1 to 6 carbon atoms.

Fluorinated compounds of formula (Ia) useful in the preparation of compositions of the present invention are available from E. I. du Pont de Nemours and Company, Wilmington, DE 19898 USA. A mixture can be used; for instance, a perfluoroalkylethyl alcohol mixture of the formula F(CF₂)ₕ CH₂CH₂OH, wherein h ranges from 6 to about 14, and is predominately 6, 8, and 10; or a purified fraction can be used, for instance, 1H,1H,2H,2H-perfluorohexanol. One preferred embodiment is a composition of the invention wherein R_{f}¹-L-X is formula (1 a), wherein X = OH, and R_{f}¹ is C₄ to C₆ perfluoroalkyl group.

Fluorinated compounds of formula (Ib) useful in the preparation of various embodiments of the invention are available by synthesis according to the following scheme:

R_{f}¹-I + CH₂=CF₂ → F(CF₂)ₙ(CH₂CF₂)ₚI

F(CF₂)ₙ(CH₂CF₂)ₚI + CH₂=CH₂ → F(CF₂)ₙ(CH₂CF₂)ₚ(CH₂CH₂)_{q}I (VI)

F(CF₂)ₙ(CH₂CF₂)ₚ(CH₂CH₂)_{q}I + Oleum/H₂O → F(CF₂)ₙ(CH₂CF₂)ₚ(CH₂CH₂)_{q}OH (IIIb)

The telomerization of vinylidene fluoride (VDF) with linear or branched perfluoroalkyl iodides is well known and produces compounds of the structure F(CF₂)ₙ(CH₂CF₂)ₚI, wherein, p is 1 to 3 or more and n is 1 to 6. For example, see Balague, et al., "Synthesis of Fluorinated telomers, Part 1, Telomerization of vinylidene fluoride with perfluoroalkyl iodides", J. Flour Chem. (1995), 70(2), 215-23. The specific telomer iodides (V) are isolated by fractional distillation. The telomer iodides (V) can be treated with ethylene by procedures described in U.S. Patent 3,979,469, (Ciba-Geigy, 1976) to provide the telomer ethylene iodides (VI) wherein q is 1 to 3 or more. The telomer ethylene iodides (VI) can be treated with oleum and hydrolyzed to provide the corresponding telomer alcohols (VII) according to procedures disclosed in WO 95/11877. The higher homologs (q = 2, 3) of telomer ethylene iodides (VI) are available with excess ethylene at high pressure.

The telomer ethylene iodides (VI) can be treated with a variety of reagents to provide the corresponding thiols according to procedures described in J. Fluorine Chemistry, 104, 2 173-183 (2000). One example is the reaction of the telomer ethylene iodides (VI) with sodium thioacetate, followed by hydrolysis.

The telomer ethylene iodides (VI) can be treated with omega-mercapto-1-alkanols according to the following scheme wherein p is 1 to 3, q is 1 to 3, and u is 2 to 4, to provide compounds of formula (VIII):

F(CF₂)ₙ(CH₂CF₂)ₚ(CH₂CH₂)_{q}I + HS(CH₂)ᵤ-OH/NaOH → F(CF₂)ₙ(CH₂CF₂)ₚ(CH₂CH₂)_{q}S(CH₂)ᵤOH (VIII)

The telomer ethylene iodides (VI) can be treated with omega-mercapto-1-alkylamines according to the following scheme wherein n is 1 to 6, p is 1 to 3, q is 1 to 3, and u is 2 to 4, to provide compounds of formula (IX):

F(CF₂)ₙ(CH₂CF₂)ₚ(CH₂CH₂)_{q}I + HS(CH₂)ᵤ-NH₂/NaOH → F(CF₂)ₙ(CH₂CF₂)ₚ(CH₂CH₂)_{q}S(CH₂)ᵤ-NH₂ (IX)

Preferred compounds of formula (VIII) and (IX) for practicing the invention are wherein p and q are each 1 and u is 2 to 4.

The fluoroalcohols of formula (Ic), wherein X is OH, used to make the compositions of the present invention are available by the following series of reactions wherein n is 1 to 6, and q is 1 to 3:

F(CF₂)ₙOCF=CF₂ + ICI/HF/BF₃ → F(CF₂)ₙOCF₂CF₂I F(CF₂)ₙOCF₂CF₂I + CH₂=CH₂ → F(CF₂)ₙOCF₂CF₂(CH₂CH₂)_{q}I F(CF₂)ₙOCF₂CF₂(CH₂CH₂)_{q}I + Oleum/H₂O → F(CF₂)ₙOCF₂CF₂(CH₂CH₂)_{q}OH (XIII)

The starting perfluoroalkyl ether iodides are made by the procedure described in US Patent 5,481,028, in Example 8, which discloses the preparation of compounds of formula (XI) from perfluoro-n-propyl vinyl ether.

In the second reaction above, a perfluoalkyl ether iodide (XI) is reacted with an excess of ethylene at an elevated temperature and pressure. While the addition of ethylene can be carried out thermally, the use of a suitable catalyst is preferred. Preferably the catalyst is a peroxide catalyst such as benzoyl peroxide, isobutyryl peroxide, propionyl peroxide, or acetyl peroxide. More preferably the peroxide catalyst is benzoyl peroxide. The temperature of the reaction is not limited, but a temperature in the range of 110°C to 130°C is preferred. The reaction time varies with the catalyst and reaction conditions, but 24 hours is typically adequate. The product can be purified by any means that separates unreacted starting material from the final product, but distillation is preferred. Satisfactory yields up to 80% of theory have been obtained using about 2.7 mols of ethylene per mole of perfluoalkyl ether iodide, a temperature of 110°C and autogenous pressure, a reaction time of 24 hours, and purifying the product by distillation.

The perfluoroalkylether ethylene iodides (XII) are treated with oleum and hydrolyzed to provide the corresponding alcohols (XIII) according to procedures disclosed in WO 95/11877. Alternatively, the perfluoroalkylether ethyl iodides are treated with N-methyl formamide followed by ethyl alcohol/acid hydrolysis. A temperature of about 130° to 160°C is preferred. The higher homologs (q = 2, 3) of telomer ethylene iodides (XII) are available with excess ethylene at high pressure.

The telomer ethylene iodides can be treated with a variety of reagents to provide the corresponding thiols according to procedures described in J. Fluorine Chemistry, 104, 2 173-183 (2000). One example is the reaction of the telomer ethylene iodides (XII) with sodium thioacetate, followed by hydrolysis.

The telomer ethylene iodides (XII) are treated with omega-mercapto-1-alkanols according the following scheme wherein n is 1 to 6, q is 1 to 3, and u is 2 to 4, to provide compounds of formula (XIV):

F(CF₂)ₙOCF₂CF₂(CH₂CH₂)_{q}I I + HS(CH₂)ᵤ-OH/NaOH → F(CF₂)ₙOCF₂CF₂(CH₂CH₂)_{q}S(CH₂)ᵤ-OH (XIV)

The telomer ethylene iodides (VIII) are treated with omega-mercapto-1-alkylamines according the following scheme wherein n is 1 to 6, q is 1 to 3, and u is 2 to 4, to provide compounds of formula (XV):

F(CF₂)ₙOCF₂CF₂(CH₂CH₂)_{q}I + HS(CH₂)ᵤ-NH₂/NaOH → F(CF₂)ₙOCF₂CF₂(CH₂CH₂)_{q}S(CH₂)ᵤ-NH₂ (XV)

Preferred compounds of formula (XIV) and (XV) for practicing the invention are wherein q is 1 and u is 2 to 4.

A wide variety of fluoroalcohols of Formula (1d) are useful in the preparation of the compositions of the present invention. One embodiment is compositions wherein the fluorinated compounds of formula (Id) are selected from the group consisting of:

F(CF₂)ₙO(CF(CF₃)CF₂O)_{w}CF(CF₃)CF₂CH₂(CₜH₂ₜ)OH;

F(CF₂)ₙO(CF(CF₃)CF₂O)_{w}CF(CF₃)CH₂(CₜH₂ₜ)OH;

F(CF₂)ₙOCF[CF₂O(C₃F₆O)_{w1}CF₂CF₃]CH₂(CₜH₂ₜ)OH ;

F(CF₂)ₙO(CF(CF₃)CF₂O)_{w}CF₂CF₂CF₂CH₂(CₜH₂ₜ)OH;

((F(CF₂)ₙ)(F(CF₂)ₙ)CFO(C₃F₆O)_{w2}CF(CF₃)CF₂CH₂(CₜH₂ₜ)OH;

F(C₃F₆O)_{w1}CF(CF₃)CF₂CH₂(CₜH₂ₜ)OH;

F(C₃F₆O)_{w1}CF(CF₃)CH₂CH₂(CₜH₂ₜ)OH:

F(C₃F₆O)_{y}(CF₂O)ₘCF₂CH₂(CₜH₂ₜ)OH;

F(C₃F₆O)_{w3}(C₂F₄O)_{w5}(CF₂O)_{w4}CF₂CH₂(CₜH₂ₜ)OH;

wherein
t is an integer of 1 to 10; w, w1, w2, w3, w4, and w5 are independently an integer from 2 to about 25; and C₃F₆O is linear or branched. The perfluoropolyether alkyl alcohols of formula (id), wherein X is OH, useful in the invention, have an average molecular weight of about 350 to about 5000, preferably about 1000 to about 2000; and more preferably about 1500 to about 2000. U.S. Patent 6,653,511; discloses synthetic methods useful in preparing the alcohols of formula (1d), wherein X is OH.

Other lower molecular weight perfluoromalkylether alcohols useful in preparation of the compositions of the invention are below:

CF₃OCF(CF₃)CF₂OCF₂CF₂CH₂CH₂OH,

CF₃OCF(CF₃)CF₂O(CF₂CF₂)₂CH₂CH₂OH,

C₂F₅OCF(CF₃)CF₂OCF₂CF₂CH₂CH₂OH,

C₂F₅OCF(CF₃)CF₂O(CF₂CF₂)₂CH₂CH₂OH,

C₃F₇OCF(CF₃)CF₂OCF₂CF₂CH₂CH₂OH,

C₃F₇OCF(CF₃)CF₂O(CF₂CF₂)₂CH₂CH₂OH,

The fluoroalcohols of formula (le) wherein X is OH, used to make composition of the present invention are available from the following reaction:

F(CF₂)ₙ-O-CF=CF₂ + H(OCH₂CH₂)ᵥOH → F(CF₂)ₙ-OCFHCF₂(OCH₂CH₂)ᵥOH

wherein
n is 2 to about 6, preferably from 2 to 4, more preferably 4; and
v is 2 to about 4, preferably from 2 to 3, more preferably 2.

Preferred compounds of Formula (le) are those wherein n is 3 or 4, g is 2, and v is 2 or 3.

Compounds of formula (le) are prepared by the reaction of a perfluoroalkyl vinyl ether with a diol in the presence of an alkali metal compound. Preferred ethers include those of formula F(CF₂)ₙ-O-CF=CF₂ wherein n is 1 to 6. Preferred diols include diethylene glycol. The diol is used at about 1 to about 15 mols per mol of ether, preferably from about 1 to about 5 mols per mol of ether. Suitable alkali metal compounds include an alkali metal, alkali earth metal, alkali hydroxide, alkali hydride, or an alkali amide. Preferred are alkali metals such as Na, K or Cs or alkali hydrides such as NaH or KH. The reaction is conducted at a temperature of from about ambient temperature to about 120°C, preferably from about 40°C to about 120°C. The reaction can be conducted in an optional solvent, such as ether or nitrile.

To make the composition of the present invention, a fluorinated compound of formula (I), is reacted with a polyisocyanate. The polyisocyanate reactant adds to the branched nature of the polymer. By the term "polyisocyanate" is meant di- and higher isocyanates and the term includes oligomers. Any polyisocyanate having predominately two or more isocyanate groups, or any isocyanate precursor of a polyisocyanate having predominately two or more isocyanate groups, is suitable for use in this invention. For example, hexamethylene diisocyanate homopolymers are suitable for use herein and are commercially available. It is recognized that minor amounts of diisocyanates can remain in products having multiple isocyanate groups. An example of this is a biuret containing residual small amounts of hexamethylene diisocyanate.

Also suitable for use as the polyisocyanate reactant are hydrocarbon diisocyanate-derived isocyanurate trimers. Preferred is DESMODUR N-3300 (a hexamethylene diisocyanate-based isocyanurate available from Bayer Corporation, Pittsburgh, PA). Other triisocyanates useful for the purposes of this invention are those obtained by reacting three moles of toluene diisocyanate with 1,1,1-tris-(hydroxymethyl)ethane or 1,1,1-tris (hydroxymethyl)propane. The isocyanurate trimer of toluene diisocyanate and that of 3-isocyanatomethyl-3,4,4-trimethylcyclohexyl isocyanate are other examples of triisocyanates useful for the purposes of this invention, as is methane-tris-(phenylisocyanate). Precursors of polyisocyanate, such as diisocyanate, are also suitable for use in the present invention as substrates for the polyisocyanates. DESMODUR N-3600, DESMODUR Z-4470, and DESMODUR XP 2410, from Bayer Corporation, Pittsburgh, PA, and bis-(4-isocyanatocylohexyl)methane are also suitable in the invention.

Preferred polyisocyanate reactants are the aliphatic and aromatic polyisocyanates containing biuret structures, or polydimethyl siloxane containing isocyanates. Such polyisocyanates can also contain both aliphatic and aromatic substituents.

Particularly preferred as the polyisocyanate reactant for all the embodiments of the invention herein are hexamethylene diisocyanate homopolymers commercially available, for instance as DESMODUR N-100, DESMODUR N-75 and DESMODUR N-3200 from Bayer Corporation, Pittsburgh, PA; 3-isocyanatomethyl-3,4,4-trimethylcyclohexyl isocyanate available, for instance as DESMODUR I (Bayer Corporation); bis-(4-isocyanatocylohexyl)methane available, for instance as DESMODUR W (Bayer Corporation) and diisocyanate trimers of formulas (IIa), (IIb), (IIc) and (IId):

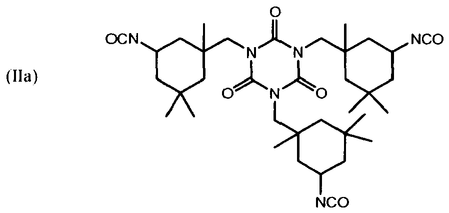

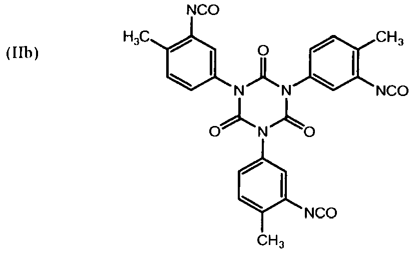

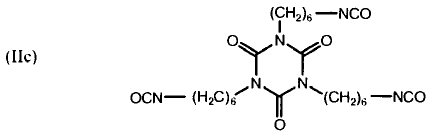

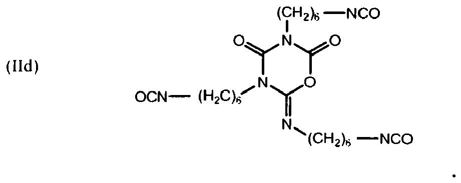

The diisocyanate trimers (IIa-d) are available, for instance as DESMODUR Z4470, DESMODUR IL, DESMODUR N-3300, and DESMODUR XP2410, respectively, from Bayer Corporation.

In a preferred embodiment, the step (i) reacting components (a) isocyanate and (b) fluorinated compound further comprises (e) a non-fluorinated organic compound selected from the group consisting of formula

R¹⁰-(R¹¹)ₖ-X

wherein
R¹⁰ is a C₁ to C₁₈ alkyl, a C₁-C₁₈ omega-alkenyl radical or a C₁ to C₁₈ omega-alkenoyl;
R¹¹ is selected from the group consisting of 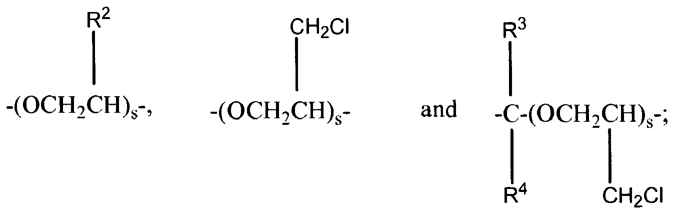 wherein
R², R³ and R⁴ are each independently, H or C₁ to C₆ alkyl, and
s is an integer of 1 to 50;
k is 0 or 1, X is an isocyanate-reactive group selected from the group consisting of -OH, -N(R)H, and -SH, and R is H or C₁ - C₆ alkyl. Preferably the non-fluorinated compound of formula R¹⁰-(R¹¹)ₖ-YH wherein Y is O, S or N(R) reacts with about 0.1 mol % to about 60 mol % of said isocyanate groups.

In another preferred embodiment, the compound of formula R¹⁰-(R¹¹)ₖ-X-YH comprises a hydrophilic water-solvatable material comprising at least one hydroxy-terminated polyether of formula (III): 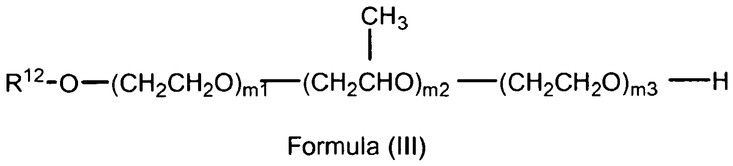 wherein

R¹² is a monovalent C₁ to C₆ alkyl or cycloalkyl radical; ml is a positive integer, and m2 and m3 are each independently a positive integer or zero; said polyether having a weight average molecular weight up to about 2000. In formula (III), ml and m3 are independently an average number of repeating oxyethylene groups, and m2 is an average number of repeating oxypropylene groups, respectively; provided that ml is always a positive integer, while m2 and m3 are a positive integer or zero. When m2 and m3 are zero, formula (III) designates an oxyethylene homopolymer. When m2 is a positive integer and m3 is zero, formula (III) designates a block or random copolymer of oxyethylene and oxypropylene. When m2 and m3 are positive integers, formula (III) designates a triblock copolymer designated PEG-PPG-PEG (polyethylene glycol-polypropylene glycol-polyethylene glycol). Preferably, the hydrophilic, water-solvatable components are the commercially available methoxypolyethylene glycols (MPEG's), or mixtures thereof, having an average molecular weight equal to or greater than about 200, and most preferably between 350 and 2000. Also commercially available, and suitable for the preparation of the compositions of the present invention, are butoxypolyoxyalkylenes containing equal amounts by weight of oxyethylene and oxypropylene groups (Union Carbide Corp. 50-HB Series UCON Fluids and Lubricants) and having an average molecular weight greater than about 1000.

After the isocyanate and fluorinated compound are reacted, the result is reacted with water and an isocyanate-reactive non-fluorinated particulate component. The isocyanate-reactive non-fluorinated particulate component required in the compositions of the invention can be any inorganic oxide particle, having isocyanate-reactive groups such as hydroxyl, amino groups, or a mixture thereof. In one embodiment the isocyanate-reactive particulate component comprises inorganic oxides of Si, Ti, Zn, Mn, Al, and Zr. Preferably the inorganic oxides have an average particle size of about 10 to 500 nm; 50 to 500 nm; 80 to 400 nm and 100 to about 300 nm. In another embodiment isocyanate-reactive particulate component is a fumed particle. In a further embodiment the isocyanate-reactive particulate component is a colloidal particle made by hydrolysis of an alkoxy silane, chlorosilane, metal alkoxide, or metal halide.

In one embodiment the inorganic oxides are at least partially surface-modified with hydrophobic groups; preferably hydrophobic groups derived from reaction of inorganic oxides with hydrophobic surface treatment reagents selected from the group consisting of alkyl halosilanes including C₁ to C₁₈ alkyl trichlorosilanes, C₁ to C₁₈ dialkyl dichlorosilanes, C₁ to C₁₈ trialkyl chlorosilanes; alkyl alkoxysilanes including C₁ to C₁₈ alkyl trimethoxysilanes, C₁ to C₁₈ dialkyl dimethoxysilanes, C₁ to C₁₈ trialkyl methoxysilanes, alkyl disilazanes including hexamethyl disilazane; polydialkyl siloxanes including polydimethyl siloxane; and mixtures thereof.

Commercially available surface modified inorganic oxides useful in forming the compositions of the invention include fumed silicas under the tradename AEROSIL, AEROXIDE, and R series available from Evonik Industries, Essen, Germany; specifically AEROXIDE LE1, LE2, and LE3, are useful. Other commercial surface modified inorganic oxides include those under the tradename CABOSIL from Cabotn Corporation, Tuscola, IL; and the HDK particle series from Wacker Chemie, Munich, Germany.

Collodial particles useful in compositions of the invention include colloidal aluminas, for example, CATAPAL and DISPAL aluminas available from Vista Chemical Company, West Creek, NJ; colloidal silica suspensions, for instance, NALCO silicas available from Nalco Chemical Company, Naperville, IL.

Specialty inorganic oxides at least partially surface-modified with hydrophobic groups, useful in the invention, can be made by synthesis. One embodiment of the invention is a composition wherein the inorganic oxides are surface modified inorganic oxide particles comprising an oxide of M atoms independently selected from the group consisting of Si, Ti, Zn, Zr, Mn, Al, and combinations thereof; at least one particle having a surface covalently bonded to at least one group represented by formula (IV)

(-L²-)_{d}(-H)(-L³)_{c}(-Si-R⁵_{(4-d)}) (IV)

wherein:
L² is an oxygen covalently bonded to M; and each L³ is independently selected from the group consisting of H, a C₁- C₂ alkyl, and OH; d and c are integers such that: d is greater than or equal to 1, c is greater than or equal to 0, and d+c =2;
R⁵ is a linear, branched, or cyclic alkyl group containing 1 to 18 carbon atoms.

The particles are prepared by reaction of the inorganic oxide and various alkyl siloxanes, silizanes, polyalkyl siloxanes. These reactions are typically conducted in a hydrocarbon solvent, such as pentane, heptane, or iso-octane, under an inert atmosphere, such as nitrogen, with heating to a temperature of from about 50 °C to about 100°C. After several hours the product is separated by conventional means, such as centrifuging, and washed. The resulting particles have at least one covalently bonded oxygen to the particle and a hydrophobized silicone and at least one hydrogen.

The compositions of the present invention are made in two steps by incorporating the particulate component into the synthesis of the polymer. These steps comprise i) reacting (a) at least one diisocyanate, polyisocyanate, or mixture thereof, having isocyanate groups, and (b) at least one fluorinated compound selected from the formula (I) as defined above, and thereafter ii) reacting with (c) water and (d) 0.05 to about 2.0 % by weight of an isocyanate-reactive non-fluorinated particulate component, based on a total dry weight of the composition.

First at least one diisocyanate, polyisocyanate, or mixture thereof, having isocyanate groups, and at least one fluorinated compound selected from the formula (I) are reacted. This reaction is typically conducted by charging a reaction vessel with the polyisocyanate; a fluoroalkyl alcohol, thiol, amine, or mixture thereof, and optionally, a non-fluorinated organic compound of formula R¹⁰-(R¹¹)ₖ-YH. The order of reagent addition is not critical. The specific weight of the polyisocyanate and other reactants charged is based on their equivalent weights and on the working capacity of the reaction vessel, and is adjusted so that the alcohol, thiol or amine, will be consumed in the first step. A suitable dry organic solvent free of groups that react with isocyanate groups is typically used as a solvent. Ketones are the preferred solvents, and methylisobutylketone (MIBK) is particularly preferred for convenience and availability. The charge is agitated and temperature adjusted to about 40 °C to 70 °C. Typically a catalyst such as a titanium chelate in an organic solvent is then added, typically in an amount of from about 0.01 to about 1.0 weight % based on the dry weight of the composition, and the temperature is raised to about 80 °C to 100 °C. This initial reaction is conducted so that less than 100% of the polyisocyanate groups are reacted. In the second step after holding for several hours, additional solvent, water, the isocyanate-reactive particulate component, and optionally a linking agent, are added, and the mixture allowed to react for several more hours or until all of the isocyanate has been reacted. More water can then be added along with surfactants, if desired, and stirred until thoroughly mixed. Following homogenization, the organic solvent can be removed by evaporation at reduced pressure, and the remaining aqueous solution or dispersion of the product polymer used as is or subjected to further processing.

In another embodiment the step (ii) reacting with (c) water and (d) the 0.05 to about 2.0 % by weight of isocyanate-reactive particulate component, further comprises (f) a linking agent. Linking agents useful in forming compositions of the invention are organic compounds having two or more zerewitinoff hydrogen atoms (Zerevitinov, Th., Quantitative Determination of the Active Hydrogen in Organic Compounds, Berichte der Deutschen Chemischen Gesellschaft, 1908, 41, 2233-43). Examples include compounds that have at least two functional groups that are capable of reacting with an isocyanate group. Such functional groups include hydroxyl, amino and thiol groups. Examples of polyfunctional alcohols useful as linking agents include: polyoxyalkylenes having 2, 3 or 4 carbon atoms in the oxyalkylene group and having two or more hydroxyl groups, for instance, polyether diols such as polyethylene glycol, polyethylene glycol-polypropylene glycol copolymers, and polytetramethylene glycol; polyester diols, for instance, the polyester diols derived from polymerization of adipic acid, or other aliphatic diacids, and organic aliphatic diols having 2 to 30 carbon atoms; non-polymeric polyols including alkylene glycols and polyhydroxyalkanes including 1,2-ethanediol, 1,2-propanol diol, 3-chloro-1,2-propanediol, 1,3-propanediol, 1,3-butanediol, 1,4-butanediol, 2,2-dimethyl-1,3-propanediol, 1,2-, 1,5-, and 1,6-hexanediol, 2-ethyl-1,6-hexanediol, 1,8-octanediol, 1,10-decanediol, glycerine, trimethylolethane, trimethylolpropane, 2-ethyl-2-(hydroxymethyl)-1,3-propanediol, 1,2,6-hexanetriol, and pentaerythritol.

Preferred linking agents are diamines and polyamines. Preferred polyfunctional amines useful as linking agents include: amine terminated polyethers such as, for example, JEFFAMINE D400, JEFFAMINE ED, and JEFFAMINE EDR-148, all from Huntsman Chemical Company, Salt Lake City, Utah; aliphatic and cycloaliphatic amines including amino ethyl piperazine, 2-methyl piperazine, 4,4'-diamino-3,3'-dimethyl dicyclohexylmethane, 1,4-diaminocyclohexane, 1,5-diamino-3-methylpentane, isophorone diamine, ethylene diamine, diethylene triamine, triethylene tetraamine, triethylene pentamine, ethanol amine, lysine in any of its stereoisomeric forms and salts thereof, hexane diamine, and hydrazine piperazine; and arylaliphatic amines such as xylylenediamine and a,a,a',a'-tetramethylxylylenediamine.

Mono- and di-alkanolamines that can be used as linking agents include: monoethanolamine, monopropanolamine, diethanolamine, dipropanolamine, and the like.

The resulting composition can be diluted with water, or further dispersed or dissolved in a solvent selected from the groups comprising simple alcohols and ketones that are suitable as the solvent for final application to substrates, hereinafter the "application solvent".

Alternatively, an aqueous dispersion, made by conventional methods with surfactants, is prepared by removing solvents by evaporation and the use of emulsification or homogenization procedures known to those skilled in the art. Surfactants may include anionic, cationic, nonionic, or blends. Such solvent-free emulsions are preferred to minimize flammability and volatile organic compounds (VOC) concerns.

The final product for application to a substrate is a dispersion (if water based) or a solution (if solvents other than water are used) of the product polymer.

Preferred polymers of the invention are wherein R_{f} has 4 to 6 carbon atoms, p and q is 1 and r is 0. Other preferred embodiments are polymers wherein said fluorinated compound reacts with about 5 mol % to about 90 mol %, and more preferably about 10 mol % to about 70 mol %, of said isocyanate groups. Other preferred embodiments are polymers wherein the linking group is a diamine or polyamine.

It will be apparent to one skilled in the art that many changes to any or all of the above procedures can also be used to optimize the reaction conditions for obtaining maximum yield, productivity or product quality.

The present invention further comprises a method of providing water repellency, oil repellency and soil resistance to a substrate comprising contacting the polymers of the invention as solutions or dispersions with a substrate. Suitable substrates include fibrous substrates as defined below.

The solution or dispersion of the composition of the present invention as described above is contacted with the substrate by any suitable method. Such methods include, but are not limited to, application by exhaustion, foam, flex-nip, nip, pad, kiss-roll, beck, skein, winch, liquid injection, overflow flood, roll, brush, roller, spray, dipping, immersion, and the like. The composition is also contacted by use of a beck dyeing procedure, continuous dyeing procedure or thread-line application.

The solution or dispersion is applied to the substrate as such, or in combination with other optional textile finishes or surface treating agents. Such optional additional components include treating agents or finishes to achieve additional surface effects, or additives commonly used with such agents or finishes. Such additional components comprise compounds or compositions that provide surface effects such as no iron, easy to iron, shrinkage control, wrinkle free, permanent press, moisture control, softness, strength, anti-slip, anti-static, anti-snag, anti-pill, stain repellency, stain release, soil repellency, soil release, water repellency, oil repellency, odor control, antimicrobial, sun protection, cleanability and similar effects. One or more of such treating agents or finishes are applied to the substrate before, after, or simultaneously with the composition of the present invention. For example for fibrous substrates, when synthetic or cotton fabrics are treated, use of a wetting agent can be desirable, such as ALKANOL 6112 available from E. I. du Pont de Nemours and Company, Wilmington, DE. When cotton or cotton-blended fabrics are treated, a wrinkle-resistant resin can be used such as PERMAFRESH EFC available from Omnova Solutions, Chester, SC.

Other additives commonly used with such treating agents or finishes are also optionally present such as surfactants, pH adjusters, cross linkers, wetting agents, wax extenders, and other additives known by those skilled in the art. Suitable surfactants include anionic, cationic, nonionic, N-oxides and amphoteric surfactants. Preferred is an anionic surfactant such as sodium lauryl sulfate, available as DUPONOL WAQE or SUPRALATE WAQE from Witco Corporation, Greenwich, CT, or SUPRALATE WAQE available from Witco, Houston TX. Examples of such additives include processing aids, foaming agents, lubricants, anti-stains, and the like. The composition is applied at a manufacturing facility, retailer location, or prior to installation and use, or at a consumer location.

Optionally a blocked isocyanate to further promote durability is added with the composition of the present invention (i.e., as a blended composition). An example of a suitable blocked isocyanate to use in the present invention is HYDROPHOBOL XAN available from Ciba Specialty Chemicals, High Point, NJ. Other commercially available blocked isocyanates are also suitable for use herein. The desirability of adding a blocked isocyanate depends on the particular application for the copolymer. For most of the presently envisioned applications, it does not need to be present to achieve satisfactory cross-linking between chains or bonding to the substrate. When added as a blended isocyanate, amounts up to about 20% by weight are added.

Optionally, nonfluorinated extender compositions are also included in the application composition to potentially further increase fluorine efficiency. Examples of such optional additional extender polymer compositions include hydrocarbon copolymers of acrylates, methacrylates, or mixtures thereof. Such copolymers can also include vinylidene chloride, vinyl chloride, vinyl acetate, or mixtures thereof.

The optimal treatment for a given substrate depends on (1) the characteristics of the fluorinated polymer of the present invention, (2) the characteristics of the surface of the substrate, (3) the amount of fluorinated polymer applied to the surface, (4) the method of application of the fluorinated polymer onto the surface, and many other factors. Some fluorinated polymer repellents work well on many different substrates and are repellent to oil, water, and a wide range of other liquids. Other fluorinated polymer repellents exhibit superior repellency on some substrates or require higher loading levels.

The present invention further comprises substrates treated with the solution or dispersion of the composition of the present invention as described above. Suitable substrates include fibrous substrates. The fibrous substrates include fibers, yarns, fabrics, fabric blends, textiles, nonwovens, paper, leather, and carpets. These are made from natural or synthetic fibers including cotton, cellulose, wool, silk, rayon, nylon, aramid, acetate, acrylic, jute, sisal, sea grass, coir, polyamide, polyester, polyolefin, polyacrylonitrile, polypropylene, polyaramid, or blends thereof. By "fabric blends" is meant fabric made of two or more types of fibers. Typically these blends are a combination of at least one natural fiber and at least one synthetic fiber, but also can include a blend of two or more natural fibers or of two or more synthetic fibers. Carpet substrates can be dyed, pigmented, printed, or undyed. Carpet substrates can be scoured or unscoured. Substrates to which it is particularly advantageous to be treated with the method of the present invention so as to impart soil resistant and soil release properties include those prepared from polyamide fibers (such as nylon), cotton and blends of polyester and cotton, particularly such substrates being used in tablecloths, garments, washable uniforms and the like. The nonwoven substrates include, for example, spunlaced nonwovens, such as SONTARA available from E. I. du Pont de Nemours and Company, Wilmington, DE, and spunbonded-meltblown-spunbonded nonwovens. The treated substrates of the present invention have one or more of excellent water repellency, oil repellency, soil resistance, soil release, stain resistance and stain release.

The compositions and method of the present invention are useful to provide excellent water repellency, oil repellency, and soil resistance to treated substrates. The surface properties are obtained using a polymer containing a particulate component and a perfluoroalkyl group of from about 2 to about 8 carbons, preferably from about 2 to about 6 carbons. The presence of the particulate component in the polymer structure in very small amounts has been found to result in the ability to impart excellent surface effect properties to substrates despite the shorter perfluoroalkyl chain length. The treated substrates of the present invention are useful in a variety of applications and products such as clothing, protective garments, carpet, upholstery, furnishings, and other uses. The excellent surface properties described above help to maintain surface cleanliness and therefore can permit longer use.

### MATERIALS AND TEST METHODS

### Test Methods

### Test Method 1 - Water Repellency

The water repellency of a treated substrate was measured according to AATCC standard Test Method No. 193-2004 and the DuPont Technical Laboratory Method as outlined in the TEFLON Global Specifications and Quality Control Tests information packet. The test determines the resistance of a treated substrate to wetting by aqueous liquids. Drops of water-alcohol mixtures of varying surface tensions are placed on the substrate and the extent of surface wetting is determined visually. The higher the water repellency rating, the better the resistance of a finished substrate to staining by water-based substances. The composition of water repellency test liquids is shown in Table 1.

**Table 1**

| Water Repellency Test Liquids | | |
|---|---|---|
| Water Repellency Rating Number | Composition, Vol. % | |
| | Isopropyl Alcohol | Distilled Water |
| 1 | 2 | 98 |
| 2 | 5 | 95 |
| 3 | 10 | 90 |
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

Testing procedure: Three drops of Test Liquid 1 are placed on the treated substrate. After 10 seconds, the drops are removed by using vacuum aspiration. If no liquid penetration or partial absorption (appearance of a darker wet patch on the substrate) is observed, the test is repeated with Test Liquid 2. The test is repeated with Test Liquid 3 and progressively higher Test Liquid numbers until liquid penetration (appearance of a darker wet patch on the substrate) is observed. The test result is the highest Test Liquid number that does not penetrate into the substrate. Higher scores indicate greater repellency.

### Test Method 2 - Oil Repellency

The treated samples were tested for oil repellency by a modification of AATCC standard Test Method No. 118, conducted as follows. A substrate treated with an aqueous dispersion of polymer as previously described, is conditioned for a minimum of 2 hours at 23 °C and 20 % relative humidity and 65 °C and 10 % relative humidity. A series of organic liquids, identified below in Table 2, are then applied dropwise to the samples. Beginning with the lowest numbered test liquid (Repellency Rating No. 1), one drop (approximately 5 mm in diameter or 0.05 mL volume) is placed on each of three locations at least 5 mm apart. The drops are observed for 30 seconds. If, at the end of this period, two of the three drops are still spherical in shape with no wicking around the drops, three drops of the next highest numbered liquid are placed on adjacent sites and similarly observed for 30 seconds. The procedure is continued until one of the test liquids results in two of the three drops failing to remain spherical to hemispherical, or wetting or wicking occurs.

The oil repellency rating is the highest numbered test liquid for which two of the three drops remained spherical to hemispherical, with no wicking for 30 seconds. In general, treated samples with a rating of 5 or more are considered good to excellent; samples having a rating of one or greater can be used in certain applications.

**Table 2**

| Oil Repellency Test Liquids | |
|---|---|
| Oil Repellency Rating Number | Test Solution |
| 1 | NUJOL Purified Mineral Oil |
| 2 | 65/35 NUJOL/n-hexadecane (v/v) at 21°C |
| 3 | n-hexadecane |
| 4 | n-tetradecane |
| 5 | n-dodecane |
| 6 | n-decane |
| 7 | n-octane |
| 8 | n-heptane |

Note: NUJOL is a trademark of Plough, Inc., for a mineral oil having a Saybolt viscosity of 360/390 at 38°C and a specific gravity of 0.880/0.900 at 15 °C.

### Test Method 3 - Accelerated Soiling Drum Test

A drum mill (on rollers) was used to tumble synthetic soil onto carpet samples. Synthetic soil was prepared as described in AATCC Test Method 123-2000, Section 8. Soil-coated beads were prepared as follows. Synthetic soil, 3 g, and 1 liter of clean nylon resin beads [SURLYN ionomer resin beads, 1/8 to 3/16 inch (0.32 to 0.48 cm) diameter, were placed into a clean, empty canister. SURLYN is an ethylene/methacrylic acid copolymer, available from E. I. du Pont de Nemours and Co., Wilmington, DE. The canister lid was closed and sealed with duct tape and the canister rotated on rollers for 5 min. The soil-coated beads were removed from the canister.

Carpet samples to insert into the drum were prepared as follows. Total carpet sample size was 8 x 25 inch (20.3 x 63.5 cm) for these tests. The carpet pile of all samples was laid in the same direction. The shorter side of each carpet sample was cut in the machine direction (with the tuft rows). Strong adhesive tape was placed on the backside of the carpet pieces to hold them together. The carpet samples were placed in the clean, empty drum mill with the tufts facing toward the center of the drum. The carpet was held in place in the drum mill with rigid wires. Soil-coated resin beads, 250 cc, and 250 cc of ball bearings (5/16 inch, 0.79 cm diameter) were placed into the drum mill. The drum mill lid was closed and sealed with duct tape. The drum was run on the rollers for 2-1/2 min at 105 revolutions per minute (rpm). The rollers were stopped and the direction of the drum mill reversed. The drum was run on the rollers for an additional 2-1/2 minutes at 105 rpm. The carpet samples were removed and vacuumed uniformly to removes excess dirt. The soil-coated beads were discarded.

The ΔE color difference for the soiled carpet was measured for the test and control items versus the original unsoiled carpet. Color measurement of each carpet was conducted on the carpet following the accelerated soiling test. For each control and test sample the color of the carpet was measured, the sample was soiled, and the color of the soiled carpet was measured. The ΔE is the difference between the color of the soiled and unsoiled samples, expressed as a positive number. The color difference was measured on each item, using a Minolta Chroma Meter CR-410. Color readings were taken at five different areas on the carpet sample, and the average ΔE was recorded. The control carpet for each test item was of the same color and construction as the test item. A lower ΔE indicates less soiling and superior soil repellency. The ΔΔE represents the difference of the soil resistance from one example to another. A positive number for ΔΔE indicates the superior soil resistance of one example to another and vice versa.

### Materials

C₄F₉(CH₂CF₂)₂I were prepared by reacting perfluorobutyl iodide (available from E. I. du Pont de Nemours and Company, Wilmington DE) and vinylidene fluoride (available from E. I. du Pont de Nemours and Company, Wilmington DE) as described by Balague, et al, "Synthesis of Fluorinated Telomers, Part 1, Telomerization of Vinylidene Fluoride with Perfluoroalkyl lodides", J. Fluorine Chem. (1995), 70(2), 215-23. The specific telomer iodides are isolated by fractional distillation.

### EXAMPLES

### Example 1

A reaction flask was charged with of DESMODUR N3300A HDI-based isocyanate (20.6 g, available from Bayer Corporation, Pittsburgh, PA), methyl isobutyl ketone (MIBK, 12.1 g) and a 0.005 M dibutyltin dilaurate solution (1.5 g) in MIBK. The mixture was heated to 60°C followed by the steady dropwise addition of 1H,1H,2H,2H-perfluorooctanol (30 g). After addition was complete, the reaction temperature was raised to 85°C and held for 3 h. A solution containing AEROXIDE LE1 (0.05 g, available from Evonik Industries, Essen, Germany), sonified in MIBK (38.3 g) and water (0.8 g) was added and the resulting mixture was heated and stirred at 85°C for an additional 12 h. The mixture was then cooled to 70°C and a mixture of WITCO C-6094 (8.3 g, available from Witco Corporation, Greenwich, CT), and deionized water (87.6 g), heated to 70 °C, was then added. The mixture was sonicated and the MIBK was distilled under reduced pressure. The resulting mixture was gravity filtered through a milk filter, and gave the desired emulsion polymer.

The product of Example 1 was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 3.

The product of Example 1 was applied to a sample of residential carpet (tan tactese-cut pile carpet). The composition was diluted with water and applied to the carpet with spray application with a goal to achieve 600 ppm (micrograms per gram) fluorine loading level on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 3A.

### Comparative Example A

This example demonstrated a composition prepared as in Example 1 but with no particulate component added into the reaction. A flask was charged with N3300A HDI-based isocyanate (34.4 g, available from Bayer Corporation, Pittsburgh, PA), MIBK (20.2 g) and a 0.005 M dibutyltin dilaurate solution (2.5 g) in MIBK. The mixture was heated to 60°C followed by the steady dropwise addition of 1H,1H,2H,2H-perfluorooctanol (50 g). After addition was complete, the reaction temperature was raised to 85°C and held for 3 h. After 3 h, MIBK (63.9 g) and water (1.1 g) were added and the resulting mixture was heated and stirred at 85°C for an additional 12 h. The mixture was then cooled to 70°C and a mixture of WITCO C-6094 (13.8 g, available from Witco Corporation, Greenwich, CT), and deionized water (145.8 g), heated to 70°C, was then added. The mixture was sonicated and the MIBK was distilled under reduced pressure. The resulting mixture was gravity filtered through a milk filter, and gave the desired emulsion polymer.

The product of Comparative A was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 3.

The product of Comparative Example A was applied to a sample of residential carpet (tan tactese-cut pile carpet). The composition was diluted with water and applied to the carpet with spray application with a goal to achieve 600 ppm (micrograms per gram) fluorine loading level on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 3A.

### Comparative Example B

This example demonstrated a composition prepared as in Example 1 but wherein the particulate component was not reacted with the polymer, but was simply physically mixed with the polymer after its formation. A flask was charged with N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of 1H,1H,2H,2H-perfluorooctanol (30 g). After addition was complete, the reaction temperature was raised to 85°C and held for 3 h. After 3 h, MIBK (35.0 g) and water (0.8 g) were added and the resulting mixture was heated and stirred at 85°C for an additional 12 h. The mixture was then cooled to 70°C followed by the addition of a heated mixture (70 °C) of WITCO C-6094 (8.3 g, available from Witco Corporation, Greenwich, CT), and 87.6 g of deionized water. Sonication of the mixture followed by the distillation of MIBK under reduced pressure and gravity filtration through a milk filter gave the desired emulsion polymer. To the final emulsion was then added AEROXIDE LE1 fumed silica particles (0.05 g, available from Evonik Industries, Essen, Germany) followed by sonication.

The product of Comparative Example B was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 3.

The product of Comparative Example B was applied to a sample of residential carpet (tan tactese-cut pile carpet). The composition was diluted with water and applied to the carpet with spray application with a goal to achieve 600 ppm (micrograms per gram) fluorine loading level on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 3A.

**Table 3**

| Example | Microg/g F | Water Repellency | Oil Repellency | Soil Resistance ΔE | ΔΔE |
|---|---|---|---|---|---|
| Example 1 | 800 | 5 | 5 | 18.03 | |
| Comp Ex A | 800 | 5 | 5 | 18.54 | +0.51 |
| Comp Ex B | 800 | 6 | 4 | 17.34 | -0.69 |
| Untreated Carpet Sample | 0 | 0 | 0 | 26.19 | +8.16 |
| | | | | | |
| Example 1 | 400 | 6 | 6 | 17.03 | |
| Comp Ex A | 400 | 5 | 5 | 18.95 | +1.92 |

Table 3 shows the results on commercial carpet for water, oil and soil repellency for Example 1 (with reacted particles), Comparative Examples A (no particles) and B (Comparative Example A blended with particles), and an untreated carpet sample. At 800 micrograms/gram fluorine loading, Example 1 had improved water and oil repellency and improved soil resistance compared to the untreated carpet sample. Example 1 and Comparative Examples A and B showed similar ratings for water and oil repellency and soil resistance. At 400 micrograms/gram loading, Example 1 showed better water and oil repellency and a higher soil resistance than Comparative Example A at the same fluorine loading.

**Table 3A**

| Example | Microg/g F | Water Repellency | Oil Repellency | Soil Resistance AE | ΔΔE |
|---|---|---|---|---|---|
| Example 1 | 600 | 5 | 2 | 17.98 | |
| Comp Ex A | 600 | 5 | 2 | 19.35 | +1.37 |
| Comp Ex B | 600 | 5 | 2 | 19.18 | +1.20 |

Table 3A shows the results for water, oil and soil repellency for Example 1 (with reacted particles), Comparative Examples A (no particles) and B (Comparative Example A blended with particles) on residential carpet (tan tactese-cut pile carpet). At 600 micrograms/gram fluorine loading, Example 1 improved soil resistance and equivalent repellency compared to Comparative Examples A and B.

### Example 2

Ethylene (56 g) was introduced to an autoclave charged with CF₃(CF₂)₃(CH₂CF₂)₂I (714 g) and d-(+)-limonene (3.2 g), and the reactor heated at 240 °C for 12 hours. The product was isolated by vacuum distillation to provide CF₃(CF₂)₃(CH₂CF₂)₂CH₂CH₂I. A mixture of CF₃(CF₂)₃(CH₂CF₂)₂CH₂CH₂I (10 g, 0.02 mol) and N-methylformamide (8.9 mL, 0.15 mol) was heated to 150 °C for 26 hours. The mixture was cooled to 100 °C, followed by the addition of water to separate the crude ester. Ethyl alcohol (3 mL) and p-toluene sulfonic acid (0.09 g) were added and the mixture stirred at 70 °C for 0.25 hours. Ethyl formate and ethyl alcohol were removed by distillation to give a crude product. The crude product was dissolved in ether, washed with 10 wt % aqueous sodium sulfite, water and brine, in turn, and dried over magnesium sulfate. Distillation provided the alcohol product, CF₃(CF₂)₃(CH₂CF₂)₂CH₂CH₂OH, (6.5 g, 83 % yield): bp 94-95 °C at 2 mm Hg (266 Pascals).

A reaction flask was charged with of DESMODUR N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of CF₃(CF₂)₃(CH₂CF₂)₂CH₂CH₂OH (27.0 g). After addition was complete, the reaction temperature was raised to 85°C and held for 3 h. A solution containing AEROXIDE LE1 fumed silica particles (0.05 g, available from Evonik Industries, Essen, Germany), sonified in 38.3 g MIBK and 0.8 g water was added and the resulting mixture was heated and stirred at 85°C for an additional 12 h. The mixture was then cooled to 70°C and a mixture of WITCO C-6094 (8.3 g) available from Witco Corporation, Greenwich, CT, and deionized water (87.6 g), heated to 70°C, was then added. Sonication of the mixture, followed by the distillation of MIBK under reduced pressure, and gravity filtration through a milk filter, gave the desired emulsion polymer.

The product of Example 2 was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 4.

### Comparative Example C

This example demonstrated a composition prepared as in Example 2 but with no particulate component added into the reaction. A flask was charged with N3300A HDI-based isocyanate (20.6 g, available from Bayer Corporation, Pittsburgh, PA), MIBK (12.1 g) and a 0.005 M dibutyltin dilaurate solution (2.5 g) in MIBK. The mixture was heated to 60 °C followed by the steady dropwise addition of CF₃(CF₂)₃(CH₂CF₂)₂CH₂CH₂OH (27.0 g). After addition was complete, the reaction temperature was raised to 85°C and held for 3 h. After 3 h, MIBK (38.3 g) and water (0.79 g) were added and the resulting mixture was heated and stirred at 85 °C for an additional 12 h. The mixture was then cooled to 70°C and a mixture of WITCO C-6094 (8.3 g) available from Witco Corporation, Greenwich, CT, and deionized water (87.6 g), heated to 70°C, was then added. The mixture was sonicated and the MIBK was distilled under reduced pressure. The resulting mixture was gravity filtered through a milk filter, and gave the desired emulsion polymer.

The product of Comparative C was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 4.

### Comparative Example D

This example demonstrated a composition prepared as in Example 2 but wherein the particulate component was not reacted with the polymer, but was simply physically mixed with the polymer after its formation. A flask was charged with N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of CF₃(CF₂)₃(CH₂CF₂)₂CH₂CH₂OH (27.0 g). After addition was complete, the reaction temperature was raised to 85°C and held for 3 h. After 3 h, MIBK (35.0 g) and water (0.8 g) were added and the resulting mixture was heated and stirred at 85°C for an additional 12 h. The mixture was then cooled to 70°C followed by the addition of a heated mixture (70°C) of 8.3 g WITCO C-6094 available from Witco Corporation, Greenwich, CT, and 87.6 g of deionized water. Sonication of the mixture followed by the distillation of MIBK under reduced pressure and gravity filtration through a milk filter gave the desired emulsion polymer. To the final emulsion was then added AEROXIDE LE1 fumed silica particles (0.05 g, available from Evonik Industries, Essen, Germany) followed by sonication.

The product of Comparative Example D was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm (microgram per gram) of fluorine on the carpet fiber weight. This was followed by an oven cure to achieve a face fiber temperature of 250 °F (121°C) for at least one minute. The carpet was tested according to Test Methods 1, 2 and 3 for water repellency, oil repellency, and soil resistance. Results are in Table 4.

**Table 4**

| Example | Microg/g F | Water Repellency | Oil Repellency | Soil Resistance ΔE | ΔΔE |
|---|---|---|---|---|---|
| Example 2 | 800 | 5 | 5 | 24.82 | |
| Comp Ex C | 800 | 4 | 5 | 20.25 | -4.57 |
| Comp Ex D | 800 | 2 | 4 | 24.76 | -0.06 |
| Untreated Carpet Sample | 0 | 0 | 0 | 24.62 | -0.2 |
| | | | | | |
| Example 2 | 400 | 4 | 5 | 24.97 | |
| Comp Ex C | 400 | 2 | 4 | 21.88 | -3.09 |

Table 4 shows the results for water, oil and soil repellency for Example 2 (with reacted particles), Comparative Examples C (no particles) and D (Comparative Example C blended with particles), and an untreated carpet sample. At 800 micrograms/gram fluorine loading, Example 2 had improved water and oil repellency compared to the untreated carpet sample and Comparative Example D. Example 2 and Comparative example C showed similar ratings for water and oil repellency. At 400 micrograms/gram loading, Example 2 had improved water and oil repellency than Comparative Example A at the same fluorine loading.

### Example 3

CF₃CF₂CF₂OCF₂CF₂I (100 g, 0.24 mol) and benzoyl peroxide (3 g) were charged to a pressure vessel under nitrogen. A series of three vacuum/nitrogen gas sequences was then executed at -50 °C and ethylene (18 g, 0.64 mol) was introduced. The vessel was heated for 24 hour at 110 °C. The autoclave was cooled to 0 °C and opened after degassing. Then the product was collected in a bottle. The product was distilled giving 80 g of CF₃CF₂CF₂OCF₂CF₂CH₂CH₂I in 80% yield. The boiling point was 56∼60°C at 25 mm Hg (3.3 kPa).

A mixture of CF₃CF₂CF₂OCF₂CF₂CH₂CH₂I (300 g, 0.68 mol, prepared as described above) and N-methyl-formamide (300 mL), was heated to 150 °C for 26 h. Then the reaction was cooled to 100 °C, followed by the addition of water to separate the crude ester. Ethyl alcohol (77 mL) and p-toluene sulfonic acid (2.59 g) were added to the crude ester, and the reaction was stirred at 70 °C for 15 minutes. Then ethyl formate and ethyl alcohol were distilled out to give a crude product. The crude product was dissolved in ether, washed with aqueous sodium sulfite, water, and brine in turn, then dried over magnesium sulfate. The product was then distilled to give 199 g of CF₃CF₂CF₂OCF₂CF₂CH₂CH₂OH in 85 % yield. The boiling point was 71∼73 °C at 40 mm Hg (5333 Pa).

A reaction flask was charged with of DESMODUR N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of CF₃CF₂CF₂OCF₂CF₂CH₂CH₂OH (32.1 g). After addition was complete, the reaction temperature was raised to 85°C and held for 3 h. A solution containing AEROXIDE LE1 fumed silica particles (0.05 g, available from Evonik Industries, Essen, Germany), sonified in MIBK (38.3 g) and water (0.8 g) was added and the resulting mixture was heated and stirred at 85 °C for an additional 12 h. The mixture was then cooled to 70 °C and a mixture of WITCO C-6094 (8.3 g, available from Witco Corporation, Greenwich, CT), and deionized water (87.6 g), heated to 70 °C, was then added. Sonication of the mixture, followed by the distillation of MIBK under reduced pressure, and gravity filtration through a milk filter, gave the desired emulsion polymer.

The product of Example 3 was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 5.

### Comparative Example E

This example demonstrated a composition prepared as in Example 3 but with no particulate component added into the reaction. A flask was charged with N3300A HDI-based isocyanate (20.6 g, available from Bayer Corporation, Pittsburgh, PA), MIBK (12.1 g) and a 0.005 M dibutyltin dilaurate solution (2.5 g) in MIBK. The mixture was heated to 60 °C followed by the steady dropwise addition of CF₃CF₂CF₂OCF₂CF₂CH₂CH₂OH (32.1 g). After addition was complete, the reaction temperature was raised to 85°C and held for 3 h. After 3 h, MIBK (38.3 g) and water (0.79 g) were added and the resulting mixture was heated and stirred at 85 °C for an additional 12 h. The mixture was then cooled to 70°C and a mixture of WITCO C-6094 (8.3 g, available from Witco Corporation, Greenwich, CT), and deionized water (87.6 g), heated to 70°C, was then added. The mixture was sonicated and the MIBK was distilled under reduced pressure. The resulting mixture was gravity filtered through a milk filter, and gave the desired emulsion polymer.

The product of Comparative E was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 5.

### Comparative Example F

This example demonstrated a composition prepared as in Example 3 but wherein the particulate component was not reacted with the polymer, but was simply physically mixed with the polymer after its formation. A flask was charged with N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of CF₃CF₂CF₂OCF₂CF₂CH₂CH₂OH (27.0 g). After addition was complete, the reaction temperature was raised to 85°C and held for 3 h. After 3 h, MIBK (35.0 g) and water (0.8 g) were added and the resulting mixture was heated and stirred at 85°C for an additional 12 h. The mixture was then cooled to 70°C followed by the addition of a heated mixture (70 °C) of WITCO C-6094 (8.3 g, available from Witco Corporation, Greenwich, CT), and deionized water (87.6 g). Sonication of the mixture followed by the distillation of MIBK under reduced pressure and gravity filtration through a milk filter gave the desired emulsion polymer. To the final emulsion was then added AEROXIDE LE1 fumed silica particles (0.05 g, available from Evonik Industries, Essen, Germany) followed by sonication.

The product of Comparative Example F was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 5.

**Table 5**

| Example | Microg/g F | Water Repellency | Oil Repellency | Soil Resistance ΔE | ΔΔE |
|---|---|---|---|---|---|
| Example 3 | 800 | 4 | 4 | 28.60 | |
| Comp Ex E | 800 | 5 | 4 | 33.82 | +5.22 |
| Comp Ex F | 800 | 5 | 4 | 30.91 | +2.31 |
| Untreated Carpet Sample | 0 | 0 | 0 | 23.29 | -5.31 |
| | | | | | |
| Example 3 | 400 | 4 | 4 | 25.31 | |
| Comp Ex E | 400 | 5 | 4 | 31.79 | +6.48 |

Table 5 shows the results for water, oil and soil repellency for Example 3 (with reacted particles), Comparative Examples E (no particles) and F (Comparative Example E blended with particles), and an untreated carpet sample. At 800 micrograms/gram fluorine loading, Example 3 had equivalent water and oil repellency and improved soil resistance to Comparative Examples E and F. While the soil resistance of the untreated samples was better, Example 3 showed an increase in oil and water repellency compared to the untreated carpet sample. At 400 micrograms/gram loading, Example 3 had equivalent water and oil repellency as the Comparative Example E but had improved soil resistance at the same fluorine loading.

### Example 4

A one gallon reactor was charged with perfluoroethylethyl iodide (PFEEI, 850 g, available from E. I. du Pont de Nemours and Company, Wilmington, DE). After cool evacuation, ethylene and tetrafluoroethylene in 27:73 ratio were added until pressure reached 60psig (413.7 x 103 Pa). The reaction was then heated to 70 °C. More ethylene and tetrafluoroethylene in 27:73 ratio were added until pressure reached 160psig (1103 x 103 Pa). A lauroyl peroxide solution (4 g lauroyl peroxide in 150 g perfluoroethylethyl iodide) was added at 1mL/min rate for 1 hour. Gas feed ratio was adjusted to 1:1 of ethylene and tetrafluoroethylene and the pressure maintained at 160 psig (1103 x 103 Pa). After about 67g of ethylene was added, both ethylene and tetrafluoroethylene feeds were stopped. The reaction was heated at 70 °C for another 8 hours. The volatiles were removed by vacuum distillation at room temperature. A mixture of iodides (773 g) was obtained, which contained 1,1,2,2,5,5,6,6-octahydroperfluoro-1-iodooctane and 1,1,2,2,5,5,6,6,9,9,10,10-dodecahydroperfluoro-1-iodododecane as major components in about 2:1 ratio.

The mixture of iodides, containing 1,1,2,2,5,5,6,6-octahydroperfluoro-1-iodooctane and 1,1,2,2,5,5,6,6,9,9,10,10-dodecahydroperfluoro-1-iodododecane (46.5 g) and N-methylformamide (NMF) (273 mL) was heated to 150°C for 19 hours. The reaction mixture was washed with water (4X500 mL) to give a residue. A mixture of this residue, ethanol (200 mL), and concentrated hydrochloric acid (1 mL) was gently refluxed (85°C bath temperature) for 24 hours. The reaction mixture was poured into water (300mL). The solid was washed with water (2X75 mL) and dried under vacuum (2 torr) to give a mixture of alcohols, 26.5 g, which contained 1,2,2,5,5,6,6-octahydroperfluoro-1-octanol and 1,1,2,2,5,5,6,6,9,9,10,10-dodecahydroperfluoro-1-dodecanol as major components.

A reaction flask was charged with of DESMODUR N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of a mixture of 1,2,2,5,5,6,6-octahydroperfluoro-1-octanol and 1,1,2,2,5,5,6,6,9,9,10,10-dodecahydroperfluoro-1-dodecanol (33.3 g). After addition was complete, the reaction temperature was raised to 85°C and held for 3 h. A solution containing AEROXIDE LE1 (0.05 g, available from Evonik Industries, Essen, Germany), sonified in MIBK (38.3 g) and water (0.8 g) was added and the resulting mixture was heated and stirred at 85 °C for an additional 12 h. The mixture was then cooled to 70 °C and a mixture of WITCO C-6094 (8.3 g, available from Witco Corporation, Greenwich, CT), and deionized water (87.6 g), heated to 70 °C, was then added. Sonication of the mixture, followed by the distillation of MIBK under reduced pressure, and gravity filtration through a milk filter, gave the desired emulsion polymer.

The product of Example 4 was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 6.

### Comparative Example G

This example demonstrated a composition prepared as in Example 4 but with no particulate component added into the reaction. A flask was charged with N3300A HDI-based isocyanate (20.6 g, available from Bayer Corporation, Pittsburgh, PA), MIBK (12.1 g) and a 0.005 M dibutyltin dilaurate solution (2.5 g) in MIBK. The mixture was heated to 60 °C followed by the steady dropwise addition of a mixture of 1,2,2,5,5,6,6-octahydroperfluoro-1-octanol and 1,1,2,2,5,5,6,6,9,9,10,10-dodecahydroperfluoro-1-dodecanol (33.3 g). After addition was complete, the reaction temperature was raised to 85 °C and held for 3 h. After 3 h, MIBK (38.3 g) and water (0.79 g) were added and the resulting mixture was heated and stirred at 85 °C for an additional 12 h. The mixture was then cooled to 70°C and a mixture of WITCO C-6094 (8.3 g, available from Witco Corporation, Greenwich, CT), and deionized water (87.6 g), heated to 70°C, was then added. The mixture was sonicated and the MIBK was distilled under reduced pressure. The resulting mixture was gravity filtered through a milk filter, and gave the desired emulsion polymer.

The product of Comparative Example G was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 6.

### Comparative Example H

This example demonstrated a composition prepared as in Example 4 but wherein the particulate component was not reacted with the polymer, but was simply physically mixed with the polymer after its formation. A flask was charged with N3300A HDI-based isocyanate (20.6 g, available from Bayer Corporation, Pittsburgh, PA), MIBK (12.1 g) and a 0.005 M dibutyltin dilaurate solution (1.5 g) in MIBK. The mixture was heated to 60 °C followed by the steady dropwise addition of a mixture of 1,2,2,5,5,6,6-octahydroperfluoro-1-octanol and 1,1,2,2,5,5,6,6,9,9,10,10-dodecahydroperfluoro-1-dodecanol (33.3 g). After addition was complete, the reaction temperature was raised to 85 °C and held for 3 h. After 3 h, MIBK (35.0 g) and water (0.8 g) were added and the resulting mixture was heated and stirred at 85 °C for an additional 12 h. The mixture was then cooled to 70 °C followed by the addition of a heated mixture (70 °C) of WITCO C-6094 (8.3 g, available from Witco Corporation, Greenwich, CT), and deionized water (87.6 g). Sonication of the mixture followed by the distillation of MIBK under reduced pressure and gravity filtration through a milk filter gave the desired emulsion polymer. To the final emulsion was then added AEROXIDE LE1 fumed silica particles (0.05 g, available from Evonik Industries, Essen, Germany) followed by sonication.

The product of Comparative Example H was applied to carpet which was yellow nylon 6,6 commercial level loop carpet having 28 oz/square yard (0.95 kg/square meter). The composition was diluted with water and applied to the carpet with spray application at 25% wet pick-up with a goal of 800 ppm and 400 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 6.

**Table 6**

| Example | Microg/g F | Water Repellency | Oil Repellency | Soil Resistance ΔE | ΔΔE |
|---|---|---|---|---|---|
| Example 4 | 800 | 3 | 5 | 17.10 | |
| Comp Ex G | 800 | 2 | 5 | 18.23 | +1.13 |
| Comp Ex H | 800 | 1 | 4 | 22.36 | +5.26 |
| Untreated Carpet Sample | 0 | 0 | 0 | 24.50 | +7.4 |
| | | | | | |
| Example 4 | 400 | 2 | 5 | 16.56 | |
| Comp Ex G | 400 | 2 | 5 | 17.98 | +1.42 |

Table 6 shows the results for water, oil and soil repellency for Example 4 (with reacted particles), Comparative Examples G (no particles) and H (Comparative Example G blended with particles), and an untreated carpet sample. At 800 micrograms/gram fluorine loading, Example 4 had improved water and oil repellency and improved soil resistance compared to the untreated carpet sample and Comparative Examples G and H. At 400 micrograms/gram loading, Example 4 had equivalent water and oil repellency and a higher soil resistance than Comparative Example G, at the same fluorine loading.

### Example 5

A dibutyl tin dilaurate/methyl isobutylketone (MIBK) solution (.004 g/gMIBK) was made by adding 0.25 g of the tin compound to 62.5 g MIBK. A 4-neck 250 mL round bottom flask was set-up with an addition funnel, thermocouple, mechanical stirrer, nitrogen inlet, condenser, and gas outlet. The flask was purged with nitrogen, heated to 60°C, and then cooled. The flask was charged with 50 g 1H,1H,2H,2H-perfluorohexanol, 33.57 g of DESMODUR N100 (isocyanate, available from Bayer Corporation, Pittsburgh, PA), and 19.71 g MIBK. The reaction mixture was heated to 60°C followed by the dropwise addition of 3.48 g of tin solution via the addition funnel. An exotherm from 60.0 °C to 104.4 °C was observed. The temperature of the reaction mixture was then raised to 85°C and held for 4 hours. After 4 hours, AEROXIDE LE1 particles (83.6 mg, available from Evonik Industries, Essen, Germany), were sonicated twice for 20 seconds each in 70.09 g of MIBK. This mixture was then added to the solution followed by the addition of 12.36 g of water and heating at 85°C overnight. When all of the reactive isocyanates were deemed fully reactive, the resulting solution was then cooled to 70°C to yield an intermediate material.

In a 250 mL Erlenmeyer flask, 6.8 g of Witco C-6094 and 54.75 g of deionized water were added and heated in a water bath to 70°C. This solution was then added to 85 g of the intermediate material generated in the above paragraph in a plastic beaker and sonicated twice for 1 minute each. The solution was then rotary evaporated to remove MIBK. The resulting solution was then filtered through a milk filter. The percent solids of this polymer was about 30 % and the %F was about 10 %.

The product of Example 5 was applied to carpet which was yellow nylon 6,6 commercial level loop carpet having 28 oz/square yard (0.95 kg/square meter). The composition was diluted with water and applied to the carpet with spray application at 25% wet pick-up with a goal of 600 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 7.

### Example 6

The procedure of Example 5 was repeated using AEROXIDE LE2 in Example 6 in place of AEROXIDE LE1. A dibutyl tin dilaurate/methyl isobutylketone (MIBK) solution (0.004 g/gMIBK) was made by adding 0.25 g of the tin compound to 62.5 g MIBK. A 4-neck 250 mL round bottom flask was set-up with an addition funnel, thermocouple, mechanical stirrer, nitrogen inlet, condenser, and gas outlet. The flask was purged with nitrogen, heated to 60°C, and then cooled. The flask was charged with 50 g 1H,1H,2H,2H-perfluorohexanol, 33.57 g of DESMODUR N100 (isocyanate, available from Bayer Corporation, Pittsburgh, PA), and 19.71 g MIBK. The reaction mixture was heated to 60 °C followed by the dropwise addition of 3.48 g of tin solution via the addition funnel. An exotherm from 60.0 °C to 104.4 °C was observed. The temperature of the reaction mixture was then raised to 85 °C and held for 4 hours. After 4 hours, AEROXIDE LE2 particles (83.6 mg, available from Evonik Industries, Essen, Germany), were sonicated twice for 20 seconds each in 70.09 g of MIBK. This mixture was then added to the solution followed by the addition of 12.36 g of water and heating at 85 °C overnight. When all of the reactive isocyanates were deemed fully reactive, the resulting solution was then cooled to 70 °C to yield an intermediate material.

In a 250 mL Erlenmeyer flask, 6.8 g of Witco C-6094 and 54.75 g of deionized water were added and heated in a water bath to 70°C. This solution was then added to 85 g of the intermediate material generated in the above paragraph in a plastic beaker and sonicated twice for 1 minute each. The solution was then rotary evaporated to remove MIBK. The resulting solution was then filtered through a milk filter. The percent solids of this polymer was about 30 % and the %F was about 10 %.

The product of Example 6 was applied to carpet which was yellow nylon 6,6 commercial level loop carpet having 28 oz/square yard (0.95 kg/square meter). The composition was diluted with water and applied to the carpet with spray application at 25% wet pick-up with a goal of 600 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 7.

### Example 7

The procedure of Example 5 was repeated using AEROXIDE LE 3 in Example 7 in place of AEROXIDE LE1. A dibutyl tin dilaurate/methyl isobutylketone (MIBK) solution (.004 g/g MIBK) was made by adding 0.25 g of the tin compound to 62.5 g MIBK. A 4-neck 250 mL round bottom flask was set-up with an addition funnel, thermocouple, mechanical stirrer, nitrogen inlet, condenser, and gas outlet. The flask was purged with nitrogen, heated to 60°C, and then cooled. The flask was charged with 50 g 1H,1H,2H,2H-perfluorohexanol, 33.57 g of DESMODUR N100 (isocyanate, available from Bayer Corporation, Pittsburgh, PA), and 19.71 g MIBK. The reaction mixture was heated to 60°C followed by the dropwise addition of 3.48 g of tin solution via the addition funnel. An exotherm from 60.0°C to 104.4°C was observed. The temperature of the reaction mixture was then raised to 85°C and held for 4 hours. After 4 hours, AEROXIDE LE3 particles (83.6 mg, available from Evonik Industries, Essen, Germany), were sonicated twice for 20 seconds each in 70.09 g of MIBK. This mixture was then added to the solution followed by the addition of 12.36 g of water and heating at 85°C overnight. When all of the reactive isocyanates were deemed fully reactive, the resulting solution was then cooled to 70°C to yield an intermediate material.

In a 250 mL Erlenmeyer flask, 6.8 g of Witco C-6094 and 54.75 g of deionized water were added and heated in a water bath to 70°C. This solution was then added to 85 g of the intermediate material generated in the above paragraph in a plastic beaker and sonicated twice for 1 minute each. The solution was then rotary evaporated to remove MIBK. The resulting solution was then filtered through a milk filter. The percent solids of this polymer was about 30 % and the %F was about 10 %.

The product of Example 7 was applied to carpet which was yellow nylon 6,6 commercial level loop carpet having 28 oz/square yard (0.95 kg/square meter). The composition was diluted with water and applied to the carpet with spray application at 25% wet pick-up with a goal of 600 ppm (microgram per gram) of fluorine on the carpet fiber weight. This was followed by an oven cure to achieve a face fiber temperature of 250 °F (121 °C) for at least one minute. The carpet was tested according to Test Methods 1, 2 and 3 for water repellency, oil repellency, and soil resistance. Results are in Table 7.

### Comparative Examples J - L

Comparative Examples J - L were prepared using the same conditions and concentrations as in Comparative Example A. Comparative Example J was then applied to carpet at a 600 micrograms/gram loading and tested using Test Methods 1, 2 and 3, and compared with Example 5. Comparative Example K was applied to carpet at a 600 micrograms/gram loading and tested using Test Methods 1, 2, and 3, and compared with Example 6. Comparative Example L was applied to carpet at a 600 micrograms/gram loading and tested using Test Methods 1, 2, and 3, and compared with Example 7. Results are listed in Table 7.

**Table 7**

| Example | Microg/gF | Water Repellency | Oil Repellency | Soil Resistance ΔE | ΔΔE |
|---|---|---|---|---|---|
| Example 5 | 600 | 5 | 1 | 22.60 | |
| Comp Ex J | 600 | 5 | 2 | 28.27 | + 5.67 |
| | | | | | |
| Example 6 | 600 | 4 | 2 | 21.84 | |
| Comp Ex K | 600 | 4 | 2 | 25.22 | + 3.38 |
| | | | | | |
| Example 7 | 600 | 4 | 2 | 24.08 | |
| Comp Ex L | 600 | 5 | 2 | 26.96 | + 2.84 |

Examples 5 - 7 had similar water and oil repellencies to the respective Comparative Examples J - L, which was the same carpet treated with the same composition but without the particulate component present in the polymer, but better drum soil properties than Comparative Examples J - L. However, Example 5 had noticeably better drum soil properties compared to Example 6 and Example 7. The increased performance attributes occurred at very low loadings (0.1 % by weight) of the particulate component relative to the weight of monomers.

## Claims

1. A composition for imparting surface properties to substrates comprising an aqueous solution or dispersion of at least one polyurethane having at least one urea linkage prepared by:
(i) reacting (a) at least one diisocyanate, polyisocyanate, or mixture thereof, having isocyanate groups, and (b) at least one fluorinated compound selected from the formula (I):
R_{f}¹ -L-X (I)
wherein
R_{f}¹ is a monovalent, partially or fully fluorinated, linear or branched, alkyl radical having 2 to 100 carbon atoms; optionally interrupted by 1 to 50 oxygen atoms; wherein the ratio of carbon atoms to oxygen atoms is at least 2:1 and no oxygen atoms are bonded to each other;
L is a bond or a linear or branched divalent linking group having 1 to 20 carbon atoms, said linking group optionally interrupted by 1 to 4 hetero-radicals selected from the group consisting or -O-, -NR-, -S-, -SO-, -SO₂-, -N(R)C(O)- wherein R is H or C₁ - C₆ alkyl, and said linking group optionally substituted with CH₂Cl;
X is an isocyanate-reactive group selected from the group consisting of -OH, -N(R)H, and -SH wherein R is H or C₁ - C₆ alkyl; and thereafter
(ii) reacting with (c) water and (d) 0.05 to 2.0 % by weight of an isocyanate-reactive non-fluorinated particulate component, based on a total dry weight of the composition.

2. The composition of claim 1 wherein R_{f}¹ is F(CF₂)ₙ, F(CF₂)ₙ(CH₂CF₂)p, F(CF₂)ₙ(CH₂)ₓ[(CF₂CF₂)ₚ-(CH₂CH₂)_{q}]ₘ, F(CF₂)ₙOF(CF₂)ₙ, F(CF₂)ₙOCFHCF₂, or F(CF₂)ₙ[OCF₂CF(CF₃)]ₚ[OCF₂CF₂]_{q}, wherein n is 1 to 6; x is 1 to 6; and p, q, and m are each independently 1 to 3.

3. The composition of claim 1 wherein R_{f}¹-L-X (I) is selected from the group consisting of formulas (Ia), (Ib), (Ic), (Id), and (Ie):
F(CF₂)ₙ(CH₂)tX. (Ia)
F(CF₂)ₙ(CH₂CF₂)ₚ(CH₂CH₂)_{q}(R⁵)ᵣX, (Ib)
F(CF₂)ₙ(CH₂)ₓ[(CF₂CF₂)ₚ(CH₂CH₂)_{q}]ₘ(R⁵)ᵣX, (Ic)
F(CF₂)ₙO(CF₂)ₙCH₂(CₜH₂ₜ)X, (Id)
F(CF₂)ₙ-OCFHCF₂(OCH₂CH₂)ᵥX, (Ie)
wherein
t is an integer of 1 to 10;
n is an integer of 1 to 6;
p, q, and m are each independently an integer of 1 to 3;
x is an integer of 1 to 6
r is 0 or 1;
X is -O-, -NH- or -S-;
R¹ is a divalent radical selected from the group consisting of-S(CH₂)ᵤ-, 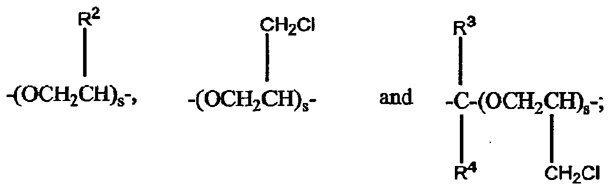 u is an integer of 2 to 4;
s is an integer of 1 to 50; and
R², R3, and R⁴ are each independently hydrogen or an alkyl group containing 1 to 6 carbon atoms.

4. The composition of claim 1 wherein the diioscyanate or polyisocyanate is selected from the group consisting of hexamethylene diisocyanate homopolymer, 3-isocyanatomethyl-3,4,4-trimethylcyclohexyl isocyanate, bis-(4-isocyanatocylohexyl)methane and diisocyanate trimers of formulas (IIa), (IIb), (IIc) and (IId):

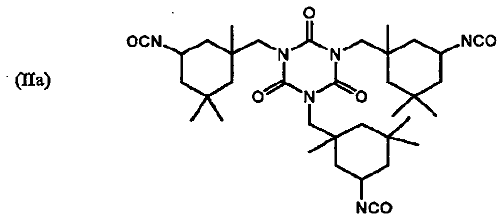

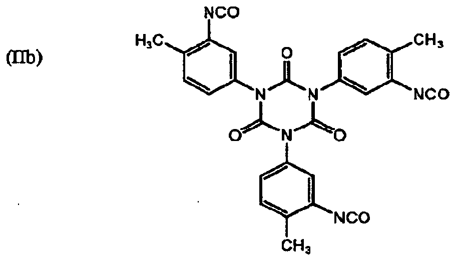

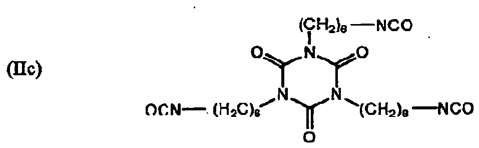

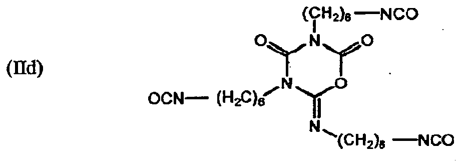

5. The composition of claim 1 wherein step (i) reacting, further comprises (e) a non-fluorinated organic compound selected from the group consisting of formula
R¹⁰-(R¹¹)ₖ-X
wherein
R¹⁰ is a C₁ to C₁₈ alkyl, a C₁ to C₁₈ omega-alkenyl radical or a C₁ to C₁₈ omega-alkenoyl;
R¹¹ is selected from the group consisting of 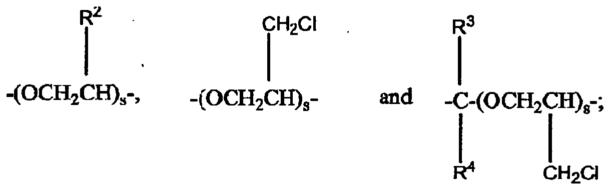 wherein
R², R³ and R⁴ are each independently, H or C₁ to C₆ alkyl, and
s is an integer of 1 to 50;
k is 0 or 1,
X is an isocyanate-reactive group selected from the group consisting of -OH, -N(R)H, and -SH, and R is H or C₁ - C₆ alkyl.

6. The composition of claim 1 wherein the isocyanate-reactive non-fluorinated particulate component comprises inorganic oxides of Si, Ti, Zn, Mn, Al, and Zr having an average particle size of 10 to 500 nm.

7. The composition of claim 6 wherein the inorganic oxides are at least partially surface-modified with hydrophobic groups, said hydrophobic groups derived from reaction of inorganic oxides with hydrophobic surface treatment reagents selected from the group consisting of alkyl halosilanes including C₁ to C₁₈ alkyl trichlorosilanes, C₁ to C₁₈ dialkyl dichlorosilanes, C₁ to C₁₈ trialkyl chlorosilanes; alkyl alkoxysilanes including C₁ to C₁₈ alkyl trimethoxysilanes, C₁ to C₁₈ dialkyl dimethoxysilanes, C₁ to C₁₈ trialkyl methoxysilanes, and C₁ to C₁₈ alkyl triethoxysilanes; alkyl disilazanes including hexamethyl disilazane; polydialkyl siloxanes including polydimethyl siloxane; and mixtures thereof.

8. The composition of claim 6 wherein the inorganic oxides are surface modified inorganic oxide particles comprising an oxide of M atoms independently selected from the group consisting of Si, Ti, Zn, Zr, Mn, AI, and combinations thereon, at least one particle having a surface covalently bonded to at least one group represented by formula (IV)
(-L²-)_{d}(-H)(-L³)_{c}(-Si-R⁵_{(4-d)}) (IV)
wherein:
L² represents an oxygen covalently bonded to M; and each L3 independently selected from the group consisting of H, a C₁-C₂ alkyl, and OH; d and c are integers such that: d ≥ 1, c ≥ 0, and d+c =2;
R⁵ is a linear, branched, or cyclic alkyl group containing 1 to 18 carbon atoms.

9. The composition of claim 1 wherein (ii) reacting with (c) water and (d) 0.05 to 2.0 % by weight of an isocyanate-reactive non-fluorinated particulate component, further comprises (f) a linking agent that is a diamine or polyamine.

10. A method of providing water repellency, oil repellency and soil resistance to a substrate comprising contacting said substrate with a composition of claim 1.

11. A substrate treated according to the method of claim 10 which is a fiber, yam, fabric, fabric blend, textile, spunlaced nonwoven, carpet, paper or leather of cotton, cellulose, wool, silk, rayon, nylon, aramid, acetate, acrylic, jute, sisal, sea grass, coir, polyamide, polyester, polyolefin, polyacrylonitrile, polypropylene, polyaramid, or blends thereof.

## Patentansprüche

1. Zusammensetzung zum Vermitteln von Oberflächeneigenschaften an Substrate, umfassend eine wässrige Lösung oder Dispersion mindestens eines Polyurethans, das mindestens eine Harnstoffverknüpfung aufweist, hergestellt durch:
(i) Reagieren (a) mindestens eines Diisocyanats, Polyisocyanats oder einer Mischung davon, die Isocyanatgruppen aufweisen, und (b) mindestens einer fluorierten Verbindung ausgewählt aus der Formel (I)
R_{f}¹-L-X (I)
wobei
R_{f}¹ ein einwertiges, teilweise oder vollständig fluoriertes, lineares oder verzweigtes Alkylradikal ist, das 2 bis 100 Kohlenstoffatome aufweist; wahlweise durch 1 bis 50 Sauerstoffatome unterbrochen; wobei das Verhältnis von Kohlenstoffatomen zu Sauerstoffatomen mindestens 2:1 beträgt und keine Sauerstoffatome aneinander gebunden sind;
L eine Bindung oder eine lineare oder verzweigte zweiwertige Verknüpfungsgruppe ist, die 1 bis 20 Kohlenstoffatome aufweist, wobei die Verknüpfungsgruppe wahlweise durch 1 bis 4 Heteroradikale unterbrochen ist, die aus der Gruppe ausgewählt sind bestehend aus -O-, -NR-, -S-, -SO-, -SO₂-, -N(R)C(O)-, wobei R H oder C₁-C₆-Alkyl ist und die Verknüpfungsgruppe wahlweise mit CH₂Cl substituiert ist;
X eine isocyanatreaktive Gruppe ist ausgewählt aus der Gruppe bestehend aus - OH, -N(R)H und -SH, wobei R H oder C₁-C₆-Alkyl ist; und daraufhin (ii) Reagieren mit (c) Wasser und (d) 0,05 bis 2,0 Gew.-% einer isocyanatreaktiven nichtfluorierten teilchenförmigen Komponente, auf das Gesamttrockengewicht der Zusammensetzung bezogen.

2. Zusammensetzung nach Anspruch 1, wobei R_{f}¹ F(CF₂)ₙ, F(CF₂)ₙ(CH₂CF₂)ₚ, F(CF₂)ₙ(CH₂)ₓ[(CF₂CF₂)ₚ-(CH₂CH₂)_{q}]ₘ, F(CF₂)ₙOF(CF₂)ₙ, F(CF₂)ₙOCFHCF₂ ist ; oder
F(CF₂)ₙ[OCF₂CF(CF₃)]ₚ[OCF₂CF₂]_{q} ist, wobei n 1 bis 6 beträgt; x 1 bis 6 beträgt;
und p, q und m jeweils unabhängig 1 bis 3 betragen.

3. Zusammensetzung nach Anspruch 1, wobei R_{f}¹-L-X (I) aus der Gruppe ausgewählt ist bestehend ans den Formeln (1a), (1b), (1c) und (1e):
F(CF₂)ₙ(CH₂)ₜX, (Ia)
F(CF₂)ₙ(CH₂CF₂)ₚ(CH₂CH₂)_{q}(R⁵)ᵣX, (Ib)
F(CF₂)ₙ(CH₂)ₓ[(CF₂CF₂)ₚ(CH₂CH₂)_{q}]ₘ(R⁵)ᵣX, (IC)
) F(CF₂)ₙO(CF₂)ₙCH₂(CₜH₂ₜ)X, (Id
F(CF₂)ₙ-OCFHCF₂(OCH₂CH₂)ᵥX, (Ie)
wobei
t eine ganze Zahl von 1 bis 10 ist;
n eine ganze Zahl von 1 bis 6 ist;
p, q und m jeweils unabhängig eine ganze Zahl von 1 bis 3 sind;
x eine ganze Zahl von 1 bis 6 ist;
r 0 oder 1 beträgt;
X -O-, -NH- oder -S- ist; R¹ ein zweiwertiges Radikal ist ausgewählt aus der Gruppe bestehend aus -
S(CH₂)ᵤ-, 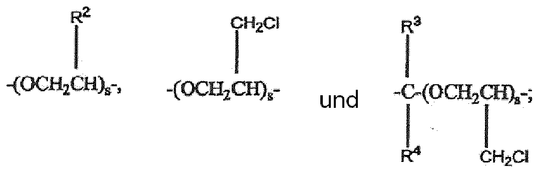 u eine ganze Zahl von 2 bis 4 ist;
s eine ganze Zahl von 1 bis 50 ist; und
R², R³ und R⁴ jeweils unabhängig Wasserstoff oder eine Alkylgruppe sind, die 1 bis 6 Kohlenstoffe enthält.

4. Zusammensetzung nach Anspruch 1, wobei das Diisocyanat oder Polyisocyanat aus der Gruppe ausgewählt ist bestehend aus Hexamethylendiisocyanat-Homopolymer, 3-Isocyanatmethyl-3,4,4-trimethylcyclohexylisocyanat, Bis-(4-isocyanatcyclohexyl)methan und Diisocyanattrimeren der Formeln (IIa), (IIb), (IIc) und (IId):

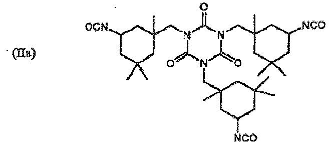

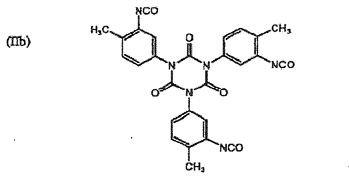

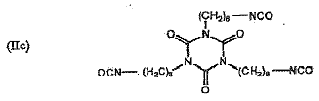

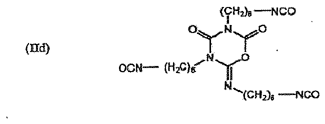

5. Zusammensetzung nach Anspruch 1, wobei Schritt (i) Reagieren des weiteren (e) eine nichtfluorierte organische Verbindung umfasst ausgewählt aus der Gruppe bestehend aus der Formel
R¹⁰-(R¹¹)ₖ-X
wobei
R¹⁰ ein C₁- bis C₁₈-Alkyl, ein C₁- bis C₁₈-Omega-Alkenylradikal oder ein C₁- bis C₁₈-Omega-Alkenoyl ist;
R¹¹ aus der Gruppe ausgewählt ist bestehend aus 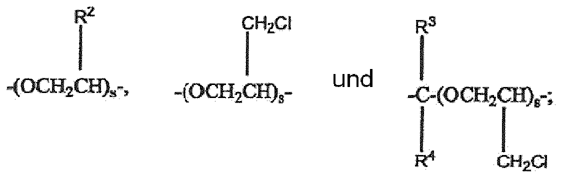 wobei
R², R³ und R⁴ jeweils unabhängig H oder C₁- bis C₆-Alkyl sind und
s eine ganze Zahl von 1 bis 50 ist;
k 0 oder 1 beträgt,
X eine isocyanatreaktive Gruppe ist ausgewählt aus der Gruppe bestehend aus - OH, -N(R)H und -SH und R H oder C₁- bis C₆-Alkyl ist.

6. Zusammensetzung nach Anspruch 1, wobei die isocyanatreaktive, nichtfluorierte teilchenförmige Komponente anorganische Oxide von Si, Ti, Zn, Mn, Al und Zr umfasst, die eine durchschnittliche Teilchengröße von 10 bis 500 nm aufweisen.

7. Zusammensetzung nach Anspruch 6, wobei die anorganischen Oxide mindestens teilweise mit hydrophoben Gruppen oberflächenmodifiziert sind, wobei die hydrophoben Gruppen aus der Reaktion von anorganischen Oxiden mit hydrophoben Oberflächenbehandlungsmitteln abgeleitet sind, die aus der Gruppe ausgewählt sind bestehend aus Alkylhalosilanen, einschließlich C₁- bis C₁₈-Alkyltrichlorsilanen, C₁- bis C₁₈-Dialkyldichlorsilanen, C₁- bis C₁₈-Trialkylchlorsilanen; Alkylalkoxysilanen, einschließlich C₁- bis C₁₈-Alkyltrimethoxysilanen, C₁- bis C₁₈-Dialkyldimethoxysilanen; C₁- bis C₁₈-Trialkylmethoxysilanen und C₁- bis C₁₈-Alkyltriethoxysilanen; Alkyldisilazanen, einschließlich Hexamethyldisilazanen; Polydialkylsiloxanen, einschließlich Polydimethylsiloxan; und Mischungen davon.

8. Zusammensetzung nach Anspruch 6, wobei die anorganischen Oxide oberflächenmodifizierte anorganische Oxidteilchen sind, die ein Oxid von M-Atomen umfassen, die unabhängig aus der Gruppe ausgewählt sind bestehend aus Si, Ti, Zn, Zr, Mn, Al und Kombinationen davon; wobei mindestens ein Teilchen eine Oberfläche aufweist, die kovalent an mindestens eine Gruppe gebunden ist, die durch die Formel (IV)
(-L²-)_{d}(-H)(-L³)_{c}(Si-R⁵)_{4-d}) IV
dargestellt ist, wobei
L² einen Sauerstoff darstellt, der kovalent an M gebunden ist; jedes L³ unabhängig aus der Gruppe ausgewählt ist bestehend aus H, einem C₁-C₂-Alkyl und OH; d und c ganze Zahlen sind, so dass: d ≥ 1, c ≥ 0 und d+c = 2 ist;
R⁵ eine lineare, verzweigte oder cyclische Alkylgruppe ist, die 1 bis 18 Kohlenstoffatome enthält.

9. Zusammensetzung nach Anspruch 1, wobei (ii) das Reagieren mit (c) Wasser und (d) 0,05 bis 2,0 Gew.-% einer isocyanatreaktiven nichtfluorierten teilchenförmigen Komponente des weiteren (f) eine Verknüpfungsgruppe umfasst, die ein Diamin oder Polyamin ist.

10. Verfahren zum Bereitstellen von Wasserabweisungsvermögen, Ölabweisungsvermögen und Schmutzwiderstandsfähigkeit bei einem Substrat, umfassend das Kontaktieren des Substrats mit einer Zusammensetzung nach Anspruch 1.

11. Substrat, das nach dem Verfahren nach Anspruch 10 behandelt wird, das eine Faser, ein Garn, Textilstoff, eine Textilstoffmischung, ein Textil, Spunlaced-Vliesstoff, Teppich, Papier oder Leder aus Baumwolle, Cellulose, Wolle, Seide, Rayon, Nylon, Aramid, Acetat, Acryl, Jute, Sisal, Seegras, Kokosfaser, Polyamid, Polyester, Polyolefin, Polyacrylnitril, Polypropylen, Polyaramid oder Mischungen davon ist.

## Revendications

1. Composition pour donner des propriétés de surface à des substrats comprenant une solution ou une dispersion aqueuse d'au moins un polyuréthane possédant au moins une liaison urée préparée par:
(i) la réaction (a) d'au moins un diisocyanate, un polyisocyanate, ou un mélange de ceux-ci, possédant des groupes isocyanates et (b) d'au moins un composé fluoré choisi parmi la formule (I):
R_{f}¹-L-X (1)
dans laquelle:
R_{f}¹ est un radical alkyle monovalent, partiellement ou totalement fluoré, linéaire ou ramifié possédant de 2 à 100 atomes de carbone; éventuellement interrompu par de 1 à 50 atomes d'oxygène; dans laquelle le rapport des atomes de carbone sur les atomes d'oxygène est d'au moins 2:1 et il n'y a pas d'atomes d'oxygène liés l'un à l'autre;
L est une liaison ou un groupe liant divalent linéaire ou ramifié possédant de 1 à 20 atomes de carbone, ledit groupe liant étant éventuellement interrompu par de 1 à 4 hétéro-radicaux choisis dans le groupe constitué de -O-, -NR-, -S-, -SO-,-SO₂-, - N(R)C(O)- où R est H ou un alkyle C₁-C₆ et ledit groupe liant étant éventuellement substitué avec CH₂Cl;
X est un groupe réactif avec un isocyanate choisi dans le groupe constitué de -OH, -N(R)H et -SH où R est H ou un alkyle C₁-C₆; et par la suite
(ii) la réaction avec (c) de l'eau et (d) de 0,05 à 2,0% en poids d'un composant particulaire non fluoré réactif avec un isocyanate, sur la base du poids sec total de la composition.

2. Composition selon la revendication 1, dans laquelle R¹_{f} est F(CF₂)ₙ, F(CF₂)ₙ(CH₂CF₂)ₚ, F(CF₂)ₙ(CH₂)ₓ[(CF₂CF₂)ₚ-(CH₂CH₂)_{q}]ₘ, F(CF₂)ₙOF(CF₂)ₙ, F(CF₂)ₙOCFHCF₂ ; ou
F(CF₂)ₙ[OCF₂CF(CF₃)]ₚ[OCF₂CF₂]_{q}, où n est de 1 à 6; x est de 1 à 6; et p, q et m sont chacun indépendamment de 1 à 3.

3. Composition selon la revendication 1, dans laquelle R_{f}¹-L-X (I) est choisi dans le groupe constitué des formules (Ia), (Ib), (Ic), (Id) et (Ie):
F(CF₂)ₙ(CH₂)ₜX, (Ia)
F(CF₂)ₙ(CH₂CF₂)ₚ(CH₂CH₂)_{q}(R⁵)ᵣX, (Ib)
F(CF₂)ₙ(CH₂)ₙ[(CF₂CF₂)ₚ(CH₂CH₂)_{q}]ₘ(R⁵)ᵣX, (IC)
F(CF₂)ₙO(CF₂)ₙCH₂(CₜH₂ₜ)X, (Id)
F(CF₂)ₙ-OCFHCF₂(OCH₂CH₂)ᵥX, (Ie)
dans lesquelles: t est un nombre entier de 1 à 10;
n est un nombre entier e 1 à 6;
p, q et m sont chacun indépendamment un nombre entier de 1 à 3;
x est un nombre entier de 1 à 6;
r est 0 ou 1;
X est -O-, -NH- ou -S-;
R¹ est un radical divalent choisi dans le groupe constitué de -S(CH₂)ᵤ-, 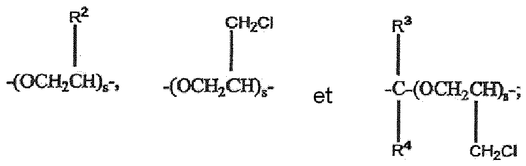 u est un nombre entier de 2 à 4;
s est un nombre entier de 1 à 50; et
R², R³ et R⁴ sont chacun indépendamment un hydrogène ou un groupe alkyle contenant de 1 à 6 atomes de carbone.

4. Composition selon la revendication 1, dans laquelle le diisocyanate ou le polyisocyanate est choisi dans le groupe constitué d'homopolymère de diisocyanate, d'hexaméthylène, de 3-isocyanatométhyl-3,4,4-triméthylcyclohexylisocyanate, de bis-(4-isocyanatocyclohexyl)méthane et de trimères de diisocyanate des formules (IIa), (IIb), (IIc) et (IId):

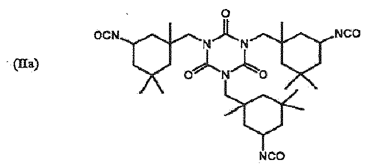

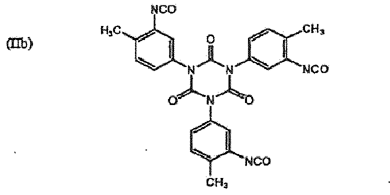

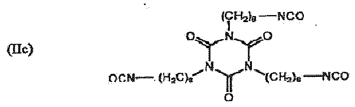

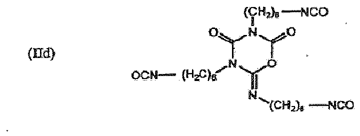

5. Composition selon la revendication 1, dans laquelle la réaction de l'étape (i) comprend en outre (e) un composé organique non fluoré choisi dans le groupe constitué de la formule:
R¹⁰-(R¹¹)ₖ-X
dans laquelle:
R¹⁰ est un alkyle C₁ à C₁₈, un radical oméga-alcényle C₁ à C₁₈ ou un oméga-alcénoyle C₁ à C₁₈;
R¹¹ est choisi dans le groupe constitué de: 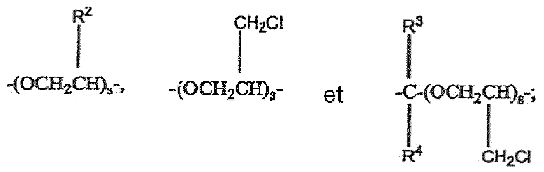
dans lesquelles:
R², R³ et R⁴ sont chacun indépendamment H ou un alkyle C₁ à C₆, et
s est un nombre entier de 1 à 50;
k est 0 ou 1,
X est un groupe réactif avec un isocyanate choisi dans le groupe constitué de -OH, -N(R)H et -SH, et R est H ou un alkyle C₁-C₆.

6. Composition selon la revendication 1, dans laquelle le composant particulaire non fluoré réactif avec un isocyanate comprend des oxydes inorganiques de Si, Ti, Zn, Mn, Al et Zr possédant une taille de particules moyenne de 10 à 500 nm.

7. Composition selon la revendication 6, dans laquelle les oxydes inorganiques sont au moins partiellement modifiés en surface avec des groupes hydrophobes, lesdits groupes hydrophobes étant dérivés de la réaction d'oxydes inorganiques avec des réactifs de traitement de surface hydrophobes choisis dans le groupe constitué d'halosilanes d'alkyle incluant des trichlorosilanes d'alkyle C₁ à C₁₈, des dichlorosilanes de dialkyle C₁ à C₁₈, des chlorosilanes de trialkyle C₁ à C₁₈, des alcoxysilanes d'alkyle incluant des triméthoxysilanes d'alkyle C₁ à C₁₈, des diméthoxysilanes de dialkyle C₁ à C₁₈, des méthoxysilanes de trialkyle C₁ à C₁₈ et des triéthoxysilanes d'alkyle C₁ à C₁₈, des disilazanes d'alkyle incluant le disilazane d'hexaméthyle; des siloxanes de polydialkyle incluant le siloxane de polydiméthyle; et des mélanges de ceux-ci.

8. Composition selon la revendication 6, dans laquelle les oxydes inorganiques sont des particules d'oxydes inorganiques modifiés en surface comprenant un oxyde de M atomes indépendamment choisis dans le groupe constitué de Si, Ti, Zn, Zr, Mn, Al et de combinaisons de ceux-ci; au moins une particule ayant une surface liée par covalence à au moins un groupe représenté par la formule (IV):
(-L²-)_{d}(-H)(-L³)_{c}(-Si-R⁵_{(4-d)}) (IV)
dans laquelle:
L² représente un oxygène lié par covalence à M; et chaque L³ est indépendamment choisi dans le groupe constitué de H, un alkyle C₁-C₂ et OH; d et c sont des nombres entiers de sorte que: d ≥ 1, c ≥ 0 et d+c = 2;
R⁵ est un groupe alkyle linéaire, ramifié ou cyclique contenant de 1 à 18 atomes de carbone.

9. Composition selon la revendication 1, dans laquelle la réaction (ii) avec (c) de l'eau et (d) de 0,05 à 2,0% en poids d'un composant particulaire non fluoré réactif avec un isocyanate comprend en outre (f) un agent liant qui est une diamine ou une polyamine.

10. Procédé pour donner un caractère hydrofuge, un caractère oléofuge et une résistance aux salissures à un substrat comprenant la mise en contact dudit substrat avec une composition selon la revendication 1.

11. Substrat traité selon le procédé de la revendication 10 qui est une fibre, un fil, un tissu, un mélange de tissus, un textile, un non tissé filé-lacé, un tapis, un papier ou un cuir de coton, de cellulose, de laine, de soie, de rayonne, de nylon, d'aramide, d'acétate, d'acrylique, de jute, de sisal, de varech, de fibre de coco, de polyamide, de polyester, de polyoléfine, de polyacrylonitrile, de polypropylène, de polyaramide ou des mélanges de ceux-ci.
